# FASCICULE DE BREVET EUROPEEN

(11) **EP 3 452 250 B1**
(45) Date de publication et mention de la délivrance du brevet: **29.11.2023**
(21) Numéro de dépôt: 17720096.1
(22) Date de dépôt: 26.04.2017
(51) Int. Cl.: B23K 37/02, B23K 26/00, B23K 26/08, B23K 26/324, B23K 26/362, B23K 26/323, B23K 26/359, B23K 26/21, B23K 26/364, B23K 26/082, B23K 26/352, B23K 26/0622, B23K 26/60, B23K 26/361, B23K 103/18

(54) **MÉTHODE ET DISPOSITIF D'ASSEMBLAGE D'UN SUBSTRAT ET D'UNE PIÈCE PAR LA STRUCTURATION DU SUBSTRAT**
VERFAHREN UND VORRICHTUNG ZUM VERBINDEN VON EINEM SUBSTRAT UND EINEM BAUTEIL MITTELS EINER STRUKTURIERUNG DES SUBSTRATS
METHOD AND APPARATUS FOR JOINING A SUBSTRATE AND A PIECE BY STRUCTURING OF THE SUBSTRATE

(30) Priorité: 02.05.2016 BE 201605314
(43) Date de publication de la demande: 13.03.2019
(73) Titulaire: Laser Engineering Applications, 4102 Seraing (BE); Fundacion Andaltec I+D+I, 23600 Martos (ES)
(72) Inventeur: HENROTTIN, Anne, 4990 Lierneux (BE); RAMOS DE CAMPOS, Jose Antonio, 4031 Angleur (BE); KUPISIEWICZ, Axel, 4122 Neupré (BE); MORALES CID, Gabriel, 14012 Córdoba (ES); GONZÁLEZ HIGUERAS, Rafael, 23600 Martos (ES); NAVAS MARTOS, Francisco Javier, Torredonjimeno 23650 (ES)
(74) Mandataire: Gevers Patents
(86) Numéro de dépôt international: PCT/EP2017/059957
(87) Numéro de publication internationale: WO 2017/191013

(56) Documents cités:
- US-A1- 2015 136 226
- AMEND P ET AL: "Thermal Joining of Thermoplastic Metal Hybrids by Means Of Mono- and Polychromatic Radiation", PHYSICS PROCEDIA, ELSEVIER, AMSTERDAM, NL, vol. 41, 9 avril 2013 (2013-04-09), pages 98-105, XP028544680, ISSN: 1875-3892, DOI: 10.1016/J.PHPRO.2013.03.056 cité dans la demande
- ANDREAS ROESNER ET AL: "Laser Assisted Joining of Plastic Metal Hybrids", PHYSICS PROCEDIA, vol. 12, 31 décembre 2011 (2011-12-31), pages 370-377, XP028381666, ISSN: 1875-3892, DOI: 10.1016/J.PHPRO.2011.03.146 [extrait le 2011-04-17]
- JIALE YONG ET AL: "Femtosecond laser controlled wettability of solid surfaces", SOFT MATTER, vol. 11, no. 46, 22 septembre 2015 (2015-09-22), pages 8897-8906, XP055336174, GB ISSN: 1744-683X, DOI: 10.1039/C5SM02153G

## Description

### Domaine technique

Selon un premier aspect, la présente invention concerne une méthode d'assemblage d'un substrat avec une pièce comprenant la structuration du substrat. Est également décrit un dispositif pour assembler un substrat et une pièce.

### Art antérieur

Il est connu de l'homme du métier de réaliser un assemblage en joignant un premier et un deuxième matériaux par la solidification du deuxième matériau au contact du premier matériau. L'aspect de surface et notamment la microstructure de la surface du premier matériau est primordial quant aux propriétés mécaniques de la jonction de l'assemblage.

Une approche pour augmenter l'adhésion du deuxième matériau sur le premier matériau est de modifier la surface du premier matériau en contact avec le deuxième matériau. Le document Amend P. et al., Physics Procedia 41, pp 98-105 (2013) présente une méthode d'assemblage comprenant la structuration de la surface d'un substrat d'aluminium afin de permettre une meilleure adhésion avec un matériau polymère. Cette méthode prévoit également de fournir des moyens de chauffage par irradiation qui génèrent une lumière comprenant des composantes monochromatique et polychromatique permettant l'assemblage du matériau polymère sur la surface structurée du substrat métallique.

Un des désavantages de cette méthode est l'utilisation d'une lumière provenant de deux sources lumineuses monochromatique et polychromatique. Un autre désavantage, bien que cette méthode présente des assemblages ayant de bonnes propriétés mécaniques et notamment des valeurs de rupture en traction élevées, est que la rupture de l'assemblage se produit au niveau de l'interface entre le substrat métallique et le matériau plastique et non dans le matériau plastique.

Une autre approche pour augmenter l'adhésion entre deux matériaux différents est décrite dans le document Roesner A. et al., Physics Procedia 12, pp 370-377 (2011). Ce document présente une méthode d'assemblage comprenant la structuration de la surface d'un substrat métallique afin de permettre une meilleure adhésion avec un matériau polymère. Ce document mentionne l'application d'une force entre le substrat métallique et le matériau polymère lors de l'étape de chauffage du matériau fusible.

### Résumé de l'invention

Un des buts de l'invention est de fournir une méthode d'assemblage qui permette une meilleure adhésion entre un substrat et une pièce. Un des buts de l'invention est de fournir une méthode d'assemblage d'un substrat et d'une pièce par l'exposition à une seule source lumineuse lors d'une étape de soudage. Un des buts de l'invention est de fournir une méthode d'assemblage d'un substrat et d'une pièce qui lors d'un test de rupture en traction, présente une rupture cohésive et non une rupture interfaciale.

A cet effet, l'invention propose, selon un premier aspect, une méthode d'assemblage d'un substrat avec une pièce, ledit substrat ayant une surface supérieure et une surface inférieure, et ladite pièce ayant une surface, ladite méthode comprenant les étapes de:
a. structurer ladite surface supérieure dudit substrat en effectuant les étapes suivantes :
   i. fournir ledit substrat,
   ii. fournir un laser de structuration à impulsions capable de générer un faisceau laser de structuration pulsé apte à graver la surface supérieure du substrat de manière non-traversante, le faisceau laser de structuration pulsé ayant une longueur d'onde comprise entre 200 et 11000 nm, une puissance suffisante pour créer une structuration du substrat et présentant des impulsions d'une durée inférieure à 1 µs,
   iii. générer le faisceau laser de structuration pulsé apte à graver la surface supérieure du substrat de manière non-traversante, le faisceau laser de structuration pulsé ayant une longueur d'onde comprise entre 200 et 11000 nm, une puissance suffisante pour créer une structuration du substrat et présentant des impulsions d'une durée inférieure à 1 µs,
   iv. fournir un dispositif de déplacement capable de générer un mouvement relatif entre le faisceau laser de structuration pulsé et ladite surface supérieure dudit substrat,
   v. irradier la surface supérieure du substrat avec le faisceau laser de structuration pulsé en induisant un mouvement relatif entre le faisceau laser de structuration pulsé et la surface supérieure dudit substrat, afin de générer une première partie de surface supérieure structurée du substrat comprenant un motif,
b. fournir ladite pièce dont ladite surface présente une deuxième partie de surface comprenant un matériau fusible ayant un point de fusion plus bas que le point de fusion de ladite première partie de surface supérieure structurée du substrat,
c. disposer la première partie de surface supérieure structurée du substrat en contact avec la deuxième partie de surface de ladite pièce,
d. appliquer une pression de façon à maintenir le contact entre ladite première partie de surface supérieure structurée du substrat et ladite deuxième partie de surface de la pièce,
e. fournir un dispositif de chauffage capable de créer une augmentation de température dans le matériau fusible suffisante pour le faire fondre, et
f. chauffer, grâce au dispositif de chauffage, le matériau fusible de manière à atteindre dans le matériau fusible, une température suffisante pour en faire fondre au moins une partie dans le motif de la première partie de surface supérieure structurée du substrat.

La méthode d'assemblage de l'invention permet de réaliser un assemblage entre un substrat et une pièce. L'assemblage ainsi réalisé permet de fixer une pièce à un substrat de manière à ce qu'il existe par exemple une grande résistance à la traction et au cisaillement entre le substrat et la pièce. Par exemple l'assemblage ne présente aucun jeu entre le substrat et la pièce. Par exemple l'assemblage permet de transférer un effort mécanique de la pièce au substrat et *vice versa* sans endommagement de l'assemblage.

La méthode d'assemblage de l'invention permet par rapport à Amend P. et al., Physics Procedia 41, pp 98-105 (2013) d'obtenir un assemblage entre un substrat et une pièce qui présente une rupture cohésive de la pièce. Le type de rupture décrit dans le document cité est systématiquement de type interfaciale. La méthode d'assemblage de l'invention permet d'obtenir un assemblage ayant des propriétés mécaniques en résistance à la traction et au cisaillement plus élevées que les assemblages décrits dans le document cité. La méthode d'assemblage de l'invention nécessite une seule source lumineuse alors qu'il est nécessaire d'utiliser deux sources lumineuses dans le document cité.

Dans le cadre du présent document, une "structuration" d'une surface d'un substrat est un enlèvement de matériau de ladite surface dudit substrat. Une structuration est donc une forme de gravure. Par exemple, une structuration peut être une microstructuration ou une texturisation. La structuration comprend préférentiellement la fabrication d'une ou plusieurs rainures(s) dans le substrat, quelle que soit la profondeur, la structure ou la forme du ou des rainures(s).

Dans le cadre du présent document, un "déplacement relatif du faisceau de structuration et du substrat" peut inclure un déplacement du faisceau de structuration alors que le substrat reste immobile, un déplacement du substrat alors que le faisceau de structuration reste immobile ou un déplacement alors la fois du faisceau de structuration et du substrat. Ce déplacement relatif inclut préférentiellement une translation. Ce déplacement relatif peut inclure une rotation.

Dans le cadre du présent document, une "zone refondue" d'une surface structurée ayant une rainure est une zone située en-dehors de la rainure et comprenant un matériau qui était présent dans la rainure avant la structuration et qui s'est redéposé en-dehors de la rainure pendant la structuration formant ainsi un relief sur la surface à proximité du bord de la rainure.

Dans le cadre du présent document, un "motif", ou "motif de structuration" est la forme de l'ensemble des rainures gravées lors de la structuration sur la surface du substrat. Le motif est notamment déterminé par le déplacement relatif du faisceau et du substrat l'un par rapport à l'autre. Par exemple une rainure selon l'invention peut être ponctuelle c'est-à-dire correspondre à une rainure définie par un point plutôt que par une ligne. Par exemple une rainure est un trou. Par exemple le trou a la forme d'un cratère en considérant les zones refondues redéposée autour du trou lors de l'étape de structuration du substrat.

Dans le cadre du présent document, la durée d'une impulsion laser est le temps pendant lequel l'émission laser d'un pulse est présent, celui-ci étant déterminé à mi-hauteur de l'intensité du pulse. Cette durée peut être par exemple mesurée avec un autocorrélateur, pour les laser d'impulsions ultracourtes (fs, ps), et une photodiode rapide pour les laser d'impulsions courte (ns).

La méthode selon l'invention permet d'obtenir un motif de structuration particulièrement dense, avec un haut niveau de rugosité à l'échelle du micromètre et/ou à l'échelle submicronique. Après un assemblage en mettant en contact le motif avec une pièce et faisant fondre de la matière de la pièce dans le motif, cela permet d'obtenir une grande surface de contact entre le substrat et la matière resolidifée issue de la pièce, notamment sur les parois latérales des rainures. Il en résulte une adhésion particulièrement forte entre le substrat et la pièce.

Grâce aux impulsions de courtes durées, l'effet du faisceau est particulièrement localisé. Cela permet de réaliser des rainures de largeur particulièrement faible. Cela permet de réaliser un motif particulièrement précis. En outre, grâce aux impulsions de courtes durées, l'effet du faisceau sur le substrat est athermique ou presque athermique.

Il est aussi possible, grâce à la méthode selon l'invention, de structurer des substrats particulièrement minces sans déformation appréciable, car la structuration selon l'invention n'échauffe pas, ou n'échauffe que très peu le substrat. Ces substrats minces ont une épaisseur inférieure à 1 mm. Ces substrats minces ont plus préférentiellement une épaisseur entre 100 µm et 500 µm.

En outre, la méthode selon l'invention permet de structurer un substrat comprenant un matériau qui serait contaminé par l'air s'il était chauffé à l'air. Par exemple, un matériau comprenant du titane ou du magnésium peut être gravé par la méthode selon l'invention car la structuration selon l'invention n'échauffe pas, ou n'échauffe que très peu le substrat et la zone soumise à la structuration peut facilement être mise dans une atmosphère inerte durant la structuration, par exemple en envoyant dessus un flux de gaz inerte comme de l'azote.

Grâce à la faible durée des impulsions, la méthode de structuration selon l'invention permet la structuration de matériaux très réfléchissants, comme le cuivre, les alliages de cuivre, l'aluminium, le zinc, les alliages d'aluminium, les alliages de cuivre et aluminium, l'or et l'argent.

La méthode selon l'invention permet de retirer particulièrement peu de matériau lors de la structuration. Elle donne donc lieu à des rainures particulièrement peu profondes. Cela évite que, lors d'un soudage du substrat avec une pièce, une bulle d'air ne se crée entre le fond des rainures et de la matière qui a pénétré dans les rainures. L'interconnexion entre les différentes rainures réalisée par la méthode selon l'invention permet également de diminuer la quantité d'air emprisonnée entre le substrat et la matière qui a pénétrée dans les rainures car cela permet de favoriser l'évacuation de l'air des rainures.

L'invention permet la formation d'une surface supérieure structurée du substrat optimisée en fonction de sa composition. L'invention permet la formation d'une surface supérieure structurée comprenant une densité de lignes optimisée en fonction de la composition du substrat. Par conséquent, l'assemblage du substrat structuré avec la méthode selon l'invention avec une pièce présente une excellente adhésion entre le substrat et la pièce. En particulier, la résistance à la traction entre le substrat et la pièce est particulièrement bonne. Par exemple, la résistance au cisaillement est particulièrement bonne. Notamment, la résistance au cisaillement dans plusieurs directions est particulièrement bonne.

Préférentiellement, la méthode d'assemblage comprend une étape de prétraitement pour augmenter une absorption optique d'une surface du substrat et comprend les étapes suivantes :
i. irradier le substrat avec un faisceau de prétraitement pour augmenter la rugosité de ladite surface du substrat ;
ii. imposer un déplacement relatif entre le substrat et le faisceau de prétraitement produit par le laser de structuration à impulsions grâce au dispositif de déplacement ;
de sorte que le prétraitement comprend une texturisation de la surface supérieure du substrat qui donne lieu à une structure de prétraitement moins profonde que le motif gravé lors de l'étape a.v..

Le prétraitement est particulièrement utile pour les substrats réfléchissant la longueur d'onde d'un faisceau laser de soudage car augmenter l'absorption permet d'atteindre plus rapidement la température optimale pour la fusion de matière fusible de la pièce.

Préférentiellement, l'augmentation de l'absorption optique de la surface supérieure du substrat est réalisée par une augmentation de la rugosité de la surface supérieure du substrat. Augmenter la rugosité permet d'augmenter l'absorption d'un faisceau laser de soudage sur la surface supérieure du substrat lors du soudage.

Préférentiellement, le prétraitement comprend une texturisation de la surface supérieure du substrat qui donne lieu à une structure de prétraitement moins profonde que le motif gravé lors de l'étape a.v..

Préférentiellement, le prétraitement a lieu après l'étape a..

Utiliser le même dispositif de déplacement et le même laser pour la structuration et le prétraitement permet de limiter les manipulations du substrat et permet de limiter le matériel utilisé lors de la méthode, ce qui représente un gain de temps et d'argent.

De manière avantageuse, une vitesse linéaire de mouvement relatif entre le du faisceau de prétraitement et ladite surface supérieure dudit substrat lors du prétraitement est au moins une fois et demi plus grande qu'une vitesse linéaire de mouvement relatif du entre le faisceau laser de structuration pulsé et ladite surface supérieure dudit substrat par rapport au substrat lors de l'étape a.v.

La précision de la structure créée par le prétraitement a moins d'importance que la précision de la gravure lors de la structuration. Il est donc avantageux d'utiliser une vitesse plus grande lors du prétraitement, même si cela diminue la précision, afin que le temps pris par le prétraitement n'ait pas un impact important sur l'ensemble du temps pris par le prétraitement et la structuration.

Préférentiellement, le prétraitement comprend la création de rainures parallèles.

Préférentiellement, le prétraitement est effectué sur la surface supérieure du substrat. La surface supérieure du substrat étant celle recevant le motif de structuration, le prétraitement est alors effectué sur la surface supérieure n'ayant pas reçu de structuration. Le prétraitement sur la surface supérieure du substrat est particulièrement avantageux lors de l'assemblage avec une pièce à souder comprenant un matériau transparent ou présentant une certaine transparence à la radiation émise par le dispositif de chauffage car il permet d'augmenter l'absorption de la surface supérieure du substrat au laser de soudage. Il est alors possible de chauffer de manière locale, la surface supérieure du substrat par une bonne absorption de la radiation émise par le dispositif de chauffage au travers de la pièce à souder. Le prétraitement est alors préféré lorsque la surface supérieure du substrat est trop réfléchissante aux rayonnements émis par le dispositif de chauffage. Le prétraitement est particulièrement recommandé pour les substrats comprenant un métal. Le prétraitement permet une soudure plus rapide et de meilleure qualité car il permet un chauffage à l'endroit de la soudure entre le substrat et la pièce à souder. Le chauffage de la surface supérieure du substrat engendre l'échauffement de la pièce à souder au niveau de son point de contact avec la pièce. L'échauffement permet ainsi la fusion locale de la pièce à souder afin qu'une partie du matériau de la pièce à souder pénètres dans les rainures du motif obtenue par structuration à la surface supérieure du substrat.

De manière avantageuse, le prétraitement permet une augmentation de la surface de contact entre le substrat et la pièce soudée (augmentation de la surface de soudure), ce qui engendre par exemple une augmentation de la résistance en traction de l'assemblage.

Les impulsions du faisceau laser de structuration pulsé ont une durée comprise entre 10⁻¹⁴s et 10⁻⁸s.

Préférentiellement, la puissance du faisceau laser de structuration pulsé est d'au moins 0.01W plus préférentiellement d'au moins 1W et encore plus préférentiellement d'au plus 100W. Ces puissance de faisceau laser représentent des puissances suffisantes pour créer une structuration du substrat.

De façon préférée, l'intensité du faisceau laser de structuration pulsé est d'au moins 10W/mm², plus préférentiellement d'au moins 50W/mm² et encore plus préférentiellement d'au moins 100W/mm². Ces intensités de faisceau laser représentent des intensités suffisantes pour créer une structuration du substrat.

De manière avantageuse, le faisceau laser de structuration pulsé a une longueur d'onde comprise entre 200 et 11000 nm de manière plus avantageuse entre 1000 et 1100 nm, de manière encore plus avantageuse entre 1030 et 1070 nm.

Dans une réalisation de l'invention, le faisceau laser de structuration pulsé a un taux de répétition comprise entre 1 KHz et 2MHz.

Dans le cadre du présent document, le "taux de répétition" d'un faisceau laser pulsé est le nombre d'impulsions du faisceau laser par unité de temps.

Dans une réalisation de l'invention, le mouvement relatif du faisceau laser de structuration pulsé par rapport au substrat se fait à une vitesse linéaire comprise entre 10 et 10000 mm/s, plus préférentiellement entre 100 et 5000 mm/s. Une vitesse linéaire dans ce dernier intervalle permet à la fois un bon taux de production de substrat structuré et une précision de structuration sur les rainures donnant lieu à une bonne qualité d'adhésion.

Dans une réalisation de l'invention, au moins une portion de la surface supérieure du substrat comprend un métal. En particulier, le métal comprend au moins un élément ou composé choisi parmi: aluminium, cuivre, titane, magnésium, acier, acier doux, acier à haute limite d'élasticité, acier à très haute limite d'élasticité, acier à ultra haute limite d'élasticité, acier inoxydable et alliage.

De manière avantageuse, au moins une portion de la surface supérieure du substrat comprend un matériau céramique ou du verre.

Dans une réalisation de l'invention, le dispositif de chauffage est un laser de soudage apte à produire un faisceau laser de soudage capable de chauffer par irradiation la première partie de surface supérieure structurée du substrat et dans laquelle la pièce est au moins partiellement transparente au faisceau de soudage. Préférentiellement, la première partie de surface supérieure structurée du substrat est chauffée par ledit dispositif de chauffage.

Le laser de soudage peut être différent du laser de structuration. En effet, la structuration peut se faire dans un atelier différent de celui dans lequel l'assemblage est réalisé. De plus, les caractéristiques du faisceau de soudage peuvent être différentes de celles du faisceau de structuration.

Préférentiellement, la pièce comprend un polymère ou du verre.

De manière avantageuses, la méthode comprend les caractéristiques suivantes : les impulsions du faisceau laser de structuration pulsé ont une durée comprise entre 10⁻¹⁵ s et 10⁻⁶ s et une puissance d'au moins 0,01 W ; l'intensité du faisceau laser de structuration pulsé est d'au moins 10 W/mm² ; le faisceau laser de structuration pulsé a une longueur d'onde comprise entre 1000 et 1100 nm ; le faisceau laser de structuration pulsé a un taux de répétition compris entre 1 KHz et 2 MHz ; le mouvement relatif du faisceau laser de structuration pulsé par rapport au substrat se fait à une vitesse linéaire comprise entre 10 et 10000 mm/s.

Préférentiellement, le faisceau laser (32) de structuration pulsé a une longueur d'onde de 1064 nm ou de 1030 nm.

Comme décrit plus haut, le substrat structuré tel qu'obtenu par l'étape de structuration de la méthode d'assemblage est particulièrement approprié à la réalisation d'un soudage du substrat avec une pièce. En effet, la soudure résultant du soudage présente une excellente adhésion entre le substrat et la pièce. En particulier, les résistances à la traction et au cisaillement entre le substrat et la pièce sont particulièrement bonnes.

Préférentiellement, le motif a une composante plus grande dans une direction que dans une autre direction.

Ces deux directions sont préférentiellement coplanaires avec la première et la deuxième directions. Le motif peut être conçu de façon à avoir une composante plus grande dans une direction dans laquelle une plus grande traction est attendue que dans une autre direction dans laquelle une moins grande traction est attendue. Les inventeurs ont trouvé que la résistance au cisaillement est meilleure dans la direction dans laquelle le motif a une plus grande composante.

De façon préférée, le motif comprend une pluralité de lignes, chaque ligne correspondant à une rainure gravée dans le substrat.

Dans le cadre du présent document, une "ligne" est un trait dont une dimension, la longueur, est beaucoup plus grande qu'une autre dimension, la largeur. Une ligne correspond à une rainure gravée lors de la structuration. Une ligne est préférentiellement continue, mais peut comporter une ou plusieurs discontinuités dont la taille est faible par rapport à la longueur de la ligne. Une ligne peut être courbe, brisée, en zigzag, comporter des segments de lignes, être le contour d'une surface,... Typiquement, la longueur d'une ligne du motif correspond à la direction du mouvement de déplacement relatif du faisceau et du substrat.

La largeur d'une rainure est la distance minimale entre deux bords de la rainure, mesurée selon un plan qui prolonge la surface du substrat. La largeur d'une rainure est typiquement perpendiculaire à la longueur d'une rainure.

La profondeur d'une rainure est la distance entre le fond de la rainure, c'est-à-dire le point de la rainure le plus éloigné de la surface du substrat, et la prolongation de la surface du substrat. La profondeur est mesurée perpendiculairement à la prolongation de la surface du substrat.

La distance entre deux rainures est la distance minimale entre les bords les plus proches des deux rainures. Elle est mesurée le long de la surface du substrat.

Un motif comportant des lignes est particulièrement avantageux car, comme l'adhésion après assemblage est principalement causée par l'emboitement dû au matériau fusible présent dans les rainures, des lignes permettent une meilleure adhésion qu'un ensemble de points ou qu'une surface pleinement car leur géométrie donne lieu à une meilleure résistance mécanique à la traction et au cisaillement.

Un motif comportant des lignes permet d'augmenter l'aire de la surface supérieure du substrat, ce qui permet une plus grande surface de contact entre le substrat et la pièce sur une surface donnée du substrat par rapport à une surface supérieure du substrat non structurée. Dans le cas d'un substrat structuré, l'aire de la surface supérieure du substrat prend également en compte les parois latérales des rainures, la paroi inférieure des rainures et l'éventuelle zone refondue le long des rainures.

De façon préférée, la pluralité de lignes du motif comprend une première ligne et une deuxième ligne telles qu'il existe une droite croisant successivement la deuxième ligne, la première ligne et la deuxième ligne. La première ligne est alors "imbriquée" dans la deuxième ligne.

L'imbrication des lignes permet un emboitement du substrat et de la pièce particulièrement résistant à la traction et au cisaillement.

De manière avantageuse, le motif comprend des lignes brisées.

Dans le cadre du présent document, "une ligne brisée" est une ligne comprenant deux segments non-parallèles. Une ligne brisée peut par exemple être une ligne en zigzag.

L'utilisation de lignes brisées donne une grande liberté quant au choix du motif, et permet en particulier d'adapter le motif au substrat, à la pièce, à l'assemblage, à l'usage d'un assemblage soudé comprenant le substrat et la pièce assemblés ensemble. Une utilisation optimale des lignes brisées prévoit de respecter un ratio optimal entre surface rainurée et surface non-rainurée. L'utilisation optimale de lignes brisée prévoit également le choix d'un motif formé de lignes brisée ayant différentes orientations afin d'obtenir de meilleures propriétés mécaniques d'assemblage.

Dans une réalisation de l'invention, le motif comprend une répétition de formes géométriques.

Dans le cadre du présent document, une forme géométrique peut être constituée des lignes formant le contour de ladite forme ou peut comprend la surface intérieure de ladite forme. La répétition de formes géométriques permet une certaine uniformité du motif sur la surface et donc une uniformité de l'adhésion après assemblage.

Préférentiellement, les formes géométriques répétées comprennent une pluralité de formes géométriques concentriques.

Cela permet d'avoir une grande surface totale de motif.

Dans une réalisation de l'invention, les formes géométriques répétées comprennent une pluralité de losanges, carrés, triangles, rectangles ou hexagones.

Des formes géométriques permettant un pavage, telles que le losange, le carré, le rectangle, le triangle ou l'hexagone régulier, permettent une grande surface totale de motif car elles permettent un bon recouvrement de la surface et une bonne résistance au cisaillement et à la traction de l'assemblage dans plusieurs directions.

De manière avantageuse, les formes géométriques répétées sont disposées en une pluralité de rangées.

Préférentiellement, une première rangée de formes géométriques et une deuxième rangée de formes géométriques sont telles qu'il existe une droite croisant successivement une forme géométrique de la deuxième rangée une forme géométrique de la première rangée et une forme géométrique de la deuxième rangée.

La première rangée de formes géométriques est alors "imbriquée" dans la deuxième rangée de formes géométriques. Cette imbrication permet d'avoir une grande surface totale de motif.

Préférentiellement, la surface structurée comprend une densité de forme géométrique par mm² comprise entre 10000 et 0,1. La densité de forme géométrique par unité de surface correspond aux nombre de formes géométriques, imbriquées ou non, qui sont compris dans une surface correspondant à une unité de surface. Par exemple 10 losanges imbriqués disposés sur une surface de 1 mm² donne une densité surfacique de forme géométrique de 10 par mm².

L'invention permet d'optimiser le type de formes géométriques et leur densité en fonction de la composition du substrat afin d'obtenir un assemblage avec par exemple un matériau thermoplastique, ledit assemblage démontrant une rupture cohésive du matériau thermoplastique.

Dans une réalisation de l'invention, le motif comprend des lignes parallèles ou des lignes courbes.

Préférentiellement, le motif comprend une densité de ligne comprise entre 100 lignes par mm² et 0,2 lignes par mm². La densité de ligne par unité de surface correspond aux nombre de lignes, droites, courbes, se croisant ou parallèles qui sont comprises dans une surface correspondant à une unité de surface. Par exemple 16 lignes courbes ou en zigzag disposées sur une surface de 1 mm² donne une densité surfacique de ligne de 16 par mm².

Préférentiellement, les rainures ont une largeur de 5 à 500 µm, plus préférentiellement, de 50 à 120 µm. Ce dernier intervalle de largeur permet une adhésion particulièrement bonne après le soudage.

Préférentiellement, les rainures ont une profondeur de 1 µm à 2 mm, plus préférentiellement, de 5 à 500 µm et encore plus préférentiellement, de 10 à 200 µm. Les inventeurs ont trouvé que ce dernier intervalle de profondeur est optimal pour l'adhésion. Une profondeur proche de 100 µm est particulièrement préférée.

Préférentiellement, deux rainures adjacentes ont une distance entre elles de minimum 5 µm, plus préférentiellement, de minimum 50 µm. Préférentiellement, deux rainures adjacentes ont une distance entre elles de maximum 5 mm, plus préférentiellement, de maximum 1 mm. Préférentiellement, deux rainures adjacentes ont une distance entre elles de minimum 5 µm et de maximum 5 mm. De telles distances entre les rainures permettent une grande surface totale de motif.

De préférence, le substrat comprend en outre des zones refondues le long des rainures, les zones refondues ayant une hauteur de moins de 80 µm par rapport à la surface supérieure du substrat structuré, plus préférentiellement elles ont une hauteur de moins de 10 µm.

De préférence, l'aire occupée par lesdites rainures sur la surface supérieure représente 0,001 à 0,85 de l'aire de ladite première partie de surface supérieure, représente de préférence 0,2 à 0,8 et représente de manière encore préférée 0,4 à 0,6.

De manière avantageuse :
ledit substrat est en aluminium ; ladite pièce est en thermoplastique transparent comme le polycarbonate transparent ; ledit laser de structuration est utilisé pour l'étape de prétraitement avec une puissance de 50 W, les impulsions du faisceau laser de structuration pulsé utilisé pour l'étape de prétraitement ont une durée de 10⁻⁷ s, un taux de répétition de 80 kHz, le mouvement relatif du faisceau laser de structuration pulsé utilisé pour l'étape de prétraitement par rapport au substrat se fait à une vitesse linéaire de 3900mm/s ; ledit laser de structuration est utilisé pour l'étape de structuration avec une puissance de 20 W, les impulsions du faisceau laser de structuration pulsé utilisé pour l'étape de structuration ont une durée de 10⁻⁷ s, un taux de répétition de 20 kHz, le mouvement relatif du faisceau laser de structuration pulsé utilisé pour l'étape de structuration par rapport au substrat se fait à une vitesse linéaire de 720mm/s ; ledit motif comprend une pluralité de losanges ayant une grande diagonale de 2 mm et une petite diagonale de 1 mm ; l'aire occupée par lesdites rainures et lesdites zones refondues le long desdites rainures sur la surface supérieure représente 0,32 de l'aire de ladite première partie de surface supérieure.

De manière avantageuse :
ledit substrat est en acier galvanisé ; ladite pièce est en polypropylène ; ledit laser de structuration est utilisé pour l'étape de structuration avec une puissance de 50 W, les impulsions du faisceau laser de structuration pulsé utilisé pour l'étape de structuration ont une durée de 10⁻⁷ s, un taux de répétition de 20 kHz, le mouvement relatif du faisceau laser de structuration pulsé utilisé pour l'étape de structuration par rapport au substrat se fait à une vitesse linéaire de 720 mm/s ; ledit motif comprend une pluralité de losanges espacés de 100 µm ; l'aire occupée par lesdites rainures et lesdites zones refondues le long desdites rainures sur la surface supérieure représente 0,79 de l'aire de ladite première partie de surface supérieure.

De manière avantageuse :
ledit substrat est en acier galvanisé ; ladite pièce est en polypropylène ; ledit laser de structuration est utilisé pour l'étape de structuration avec une puissance de 50 W, les impulsions du faisceau laser de structuration pulsé utilisé pour l'étape de structuration ont une durée de 10⁻⁷ s, un taux de répétition de 20 kHz, le mouvement relatif du faisceau laser de structuration pulsé utilisé pour l'étape de structuration par rapport au substrat se fait à une vitesse linéaire de 300mm/s ; ledit motif comprend une pluralité de losanges espacés de 80 µm ; l'aire occupée par lesdites rainures et lesdites zones refondues le long desdites rainures sur la surface supérieure représente 0,81 de l'aire de ladite première partie de surface supérieure.

De préférence, le substrat structuré a une surface s'étendant selon une première direction et une deuxième direction non-parallèles et comprenant un motif gravé de façon non-traversante sur la surface supérieure du substrat, le motif s'étend au moins partiellement selon la première direction et la deuxième direction et comprend une pluralité de lignes brisées, chaque ligne brisée correspond à un rainure.

De manière avantageuse, le motif comprend une première ligne brisée et une deuxième ligne brisée telles qu'il existe une droite croisant successivement la deuxième ligne brisée, la première ligne brisée et la deuxième ligne brisée. Dans une réalisation de l'invention, le motif comprend une répétition de formes géométriques, le contour de chaque forme géométrique correspondant à une ligne brisée.

Est également décrit un assemblage comprenant un substrat et une pièce obtenu par la méthode d'assemblage selon le premier aspect de l'invention. Les différentes variantes et avantages décrits pour la méthode selon le premier aspect de l'invention s'appliquent à cet assemblage, mutadis mutandis.

Est également décrit un dispositif pour l'assemblage d'un substrat avec une pièce, ledit substrat ayant une surface supérieure et une surface inférieure, ladite pièce ayant une surface qui présente une deuxième partie de surface comprenant un matériau fusible ayant un point de fusion plus bas que le point de fusion de ladite surface supérieure dudit substrat, ledit dispositif comprenant :
- un laser de structuration à impulsions capable de générer un faisceau laser de structuration pulsé apte à graver ladite surface supérieure dudit substrat de manière non-traversante, le faisceau laser de structuration pulsé ayant une longueur d'onde comprise entre 1000 et 1100 nm, une puissance suffisante pour créer une structuration du substrat et présentant des impulsions d'une durée inférieure à 1 µs ;
- un moyen de déplacement capable de générer un mouvement relatif entre ledit faisceau laser de structuration pulsé et ladite surface supérieure dudit substrat ;
- un moyen de mise en contact de ladite surface de ladite pièce avec ladite surface supérieure dudit substrat ;
- un moyen de mise en compression ;
- un dispositif de chauffage capable de créer une augmentation de température suffisante dans ledit matériau fusible pour en faire fondre au moins une partie ;

ledit laser de structuration et ledit moyen de déplacement étant configurés pour imposer audit faisceau laser un mouvement relatif entre ledit faisceau laser de structuration pulsé et ladite surface supérieure dudit substrat afin de générer un motif formé par une pluralité de rainures gravées sur une première partie de ladite surface supérieure dudit substrat ;
ledit moyen de mise en contact étant configuré pour disposer la première partie de surface supérieure dudit substrat comprenant ledit motif en contact avec la deuxième partie de surface de ladite pièce ;
ledit moyen de mise en compression étant configuré pour imposer une force de compression entre la première partie de surface supérieure dudit substrat comprenant ledit motif et la deuxième partie de surface de ladite pièce ;
ledit moyen de chauffage étant configuré pour faire fondre au moins une partie du matériau fusible de ladite pièce dans ladite pluralité de rainures dudit motif de la première partie de surface supérieure du substrat ;
ledit matériau fusible de ladite pièce étant apte à se solidifier à l'intérieur desdites rainures dudit motif du substrat afin de créer une jonction entre ladite pièce et ledit substrat formant un assemblage comprenant ladite pièce et ledit substrat.

Les différentes variantes et avantages décrits pour la méthode selon le premier aspect de l'invention et pour l'assemblage s'appliquent au dispositif, mutadis mutandis.

### Brève description des figures

D'autres caractéristiques et avantages de l'invention apparaîtront à la lecture de la description détaillée qui suit pour la compréhension de laquelle on se reportera aux figures annexées parmi lesquelles :
- les figures 1 et 2 illustrent des étapes d'une étape de structuration d'un substrat comprise dans la méthode de l'invention,
- la figure 3 illustre des étapes d'une méthode d'assemblage selon l'invention,
- la figure 4 illustre un dispositif d'assemblage et plus particulièrement permettant la structuration du substrat selon l'invention,
- les figures 5, 6, 7 et 8 illustrent un premier, deuxième, troisième et quatrième exemples respectivement, de motifs gravés lors de l'étape de structuration de la méthode selon l'invention,
- les figures 9, 10, 11 et 12 illustrent un premier, deuxième, troisième et quatrième exemple respectivement, de coupe de rainure gravée lors de l'étape de structuration de la méthode selon l'invention,
- la figure 13 illustre une coupe schématique d'un substrat structuré lors de l'étape de structuration de la méthode selon l'invention,
- la figure 14 illustre un dispositif d'assemblage et plus particulièrement destiné à réaliser le soudage du substrat structuré et de la pièce, et
- la figure 15 illustre un dispositif de mise sous pression selon la méthode et le dispositif d'assemblage et de soudage pour la réalisation de l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

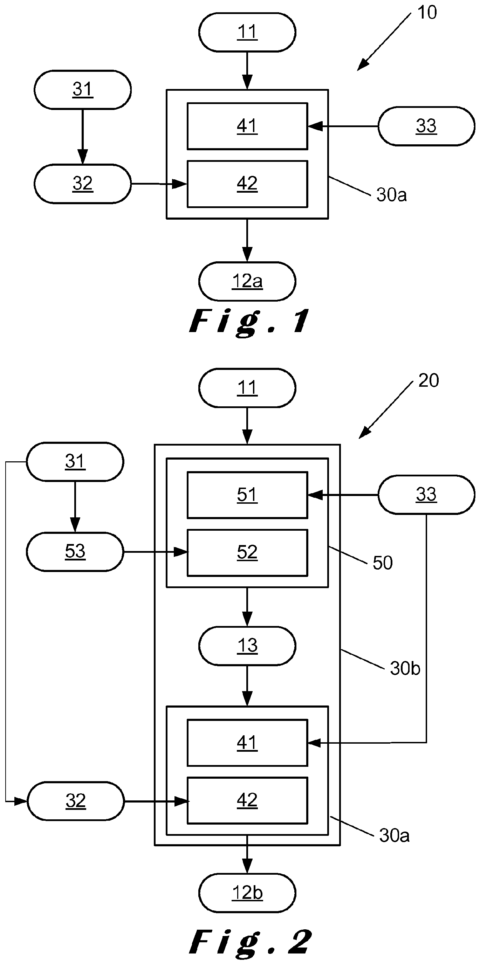

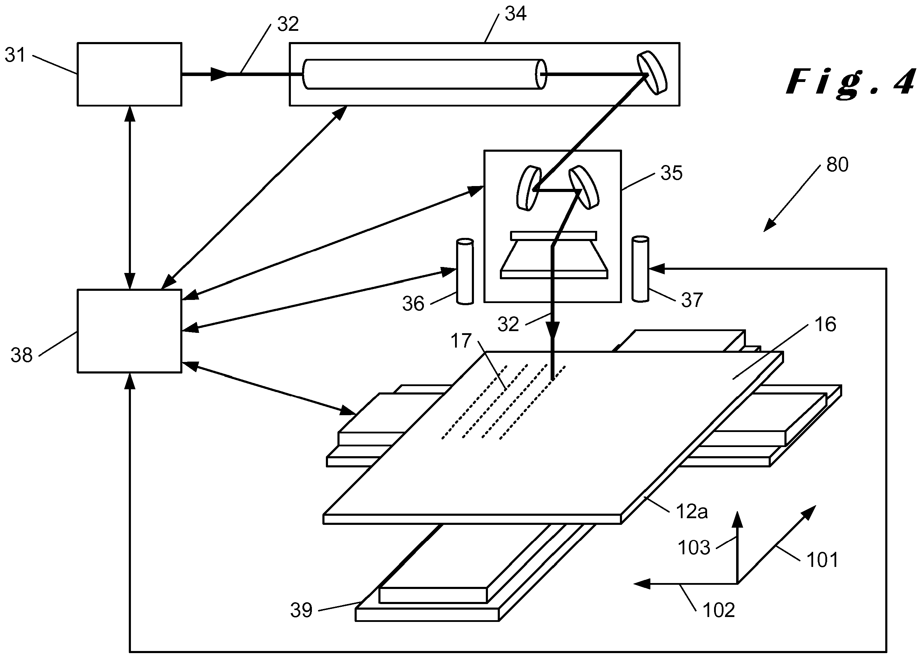

La figure 1 illustre l'étape de structuration 10 d'un substrat 11 selon la méthode de l'invention. L'étape de structuration 10 fait appel à un laser de structuration 31 qui émet un faisceau 32 de structuration pulsé apte à graver une surface supérieure 16 du substrat 11, la surface supérieure 16 s'étendant selon une première direction 101 et une deuxième direction 102, la première direction 101 et la deuxième direction 102 n'étant pas parallèles. La surface supérieure 16 et les directions 101, 102 sont illustrées à la figure 4. L'étape de structuration 10 fait également appel à un dispositif 33 de déplacement, pour déplacer faisceau 32 de structuration et le substrat 11 l'un par rapport à l'autre.

Une structuration 30a comprend une irradiation 42 de la surface supérieure 16 et un mouvement 41 relatif du faisceau 32 de structuration et du substrat 11. L'irradiation 42 et le mouvement 41 sont préférentiellement simultanés. Il est toutefois possible qu'ils soient successifs, et notamment qu'ils se répètent de nombreuses fois l'un à la suite de l'autre.

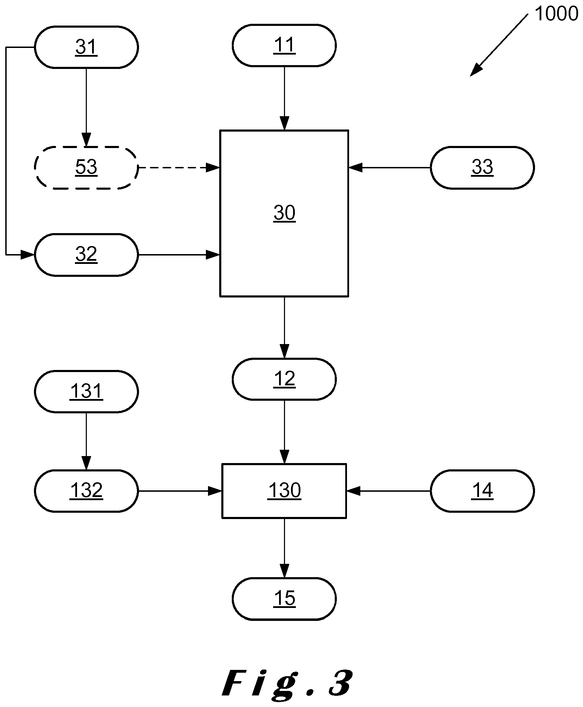

La structuration 30a donnant lieu à la formation d'un motif 17 sur la surface supérieure 16 du substrat 11, il en résulte un substrat 12a avec motif. Celui-ci peut alors être utilisé dans un soudage 130 subséquent (figure 3) compris dans la méthode d'assemblage.

Le substrat 11 comprend préférentiellement un métal sur la surface supérieure 16 irradiée ou comprend une portion en métal sur la surface supérieure 16 irradiée. Par exemple, ce métal peut comprendre un élément ou composé choisi parmi les suivants: aluminium, cuivre, titane, magnésium, zinc, acier, acier doux, acier à haute limite d'élasticité, acier à très haute limite d'élasticité, acier à ultra haute limite d'élasticité, acier inoxydable et alliage. Le substrat 11, ou une portion de celui-ci, peut également comprendre un matériau céramique ou du verre. La surface 16 supérieure est préférentiellement plane. La surface 16 supérieure peut également être courbe.

Le laser de structuration 31 est préférentiellement un laser à impulsions. Le laser de structuration 31 est préférentiellement un laser capable d'envoyer des impulsions ayant une durée de moins de 1000ns, plus préférentiellement entre 10⁻¹⁵s et 10⁻⁶s, encore plus préférentiellement entre 10⁻¹⁴s et 10⁻⁸s.

Le laser de structuration 31 et le faisceau de structuration 32 permettent d'avoir un faisceau de structuration 32 pulsé avec un taux de répétition entre 1 KHz et 2 MHz. Le laser de structuration 31 est préférentiellement capable d'émettre un faisceau d'une intensité de minimum 10 W/mm², plus préférentiellement 50 W/mm², encore plus préférentiellement 100 W/mm². Le laser de structuration 31 est capable d'émettre un faisceau d'une puissance d'au moins 0.01W, préférentiellement 0,1W, plus préférentiellement 1W, encore plus préférentiellement 100W. Le laser de structuration 31 est capable d'émettre un faisceau d'une longueur d'onde entre 200 et 11000 nm, préférentiellement entre 300 et 2000 nm, plus préférentiellement entre 1000 et 1100 nm, encore plus préférentiellement entre 1030 et 1070 nm.

Dans le cadre du présent document, la "puissance" d'un faisceau laser pulsé est la puissance moyenne de ce faisceau, à savoir l'intégration de l'énergie de toutes les impulsions intégrées dans une durée déterminée divisée par cette durée.

Dans le cadre du présent document, l'"intensité" d'un faisceau laser pulsé est le rapport entre la puissance de ce faisceau et l'aire de la surface irradiée par ce faisceau.

Les paramètres du laser 31 de structuration pour la production du faisceau 32 de structuration sont choisis en fonction du substrat 11, de façon à ce que l'irradiation 42 enlève de la matière du substrat 11. Les paramètres du laser 31 de structuration sont préférentiellement gardés constants durant toute la durée de la structuration 30a.

Le mouvement 41 relatif peut inclure un déplacement du faisceau 32 de structuration, un déplacement du substrat 11 ou des déplacements des deux. Le mouvement 41 peut inclure une rotation, notamment une rotation du substrat 11, en particulier si la surface supérieure 16 n'est pas plane. Dans une réalisation de l'invention, qui est montrée à la figure 4, le dispositif 33 de déplacement comprend une tête scanner 35 capable de déplacer le faisceau 32 de structuration et un dispositif 39 de déplacement du substrat 11.

L'irradiation 42 enlève de la matière de la surface 11, par exemple par vaporisation ou sublimation. Elle crée ainsi une rainure non-traversant dont la profondeur et la largeur sont essentiellement déterminées par les caractéristiques du faisceau de structuration et la vitesse du mouvement 41. Le mouvement 41 fait que l'irradiation 42 se produit en différents points de la surface supérieure 16, créant ainsi un motif 17 prédéfini. Le motif 17 est préférentiellement programmé sur un ordinateur 38 (visible figure 4) qui guide le mouvement 41 grâce au dispositif 39 de déplacement du substrat 11 et à la tête scanner 35 (visibles figure 4). Le motif 17 comprend préférentiellement des lignes 18, plus préférentiellement des lignes brisées.

La figure 2 illustre une étape de structuration 20 d'un substrat 11 selon la méthode de l'invention. L'étape de structuration 20 utilise les mêmes éléments (substrat 11, laser 31 de structuration, faisceau 32 de structuration, dispositif 33 de déplacement) et passe par les mêmes étapes (déplacement relatif 41, irradiation 42 c'est-à-dire création du motif par structuration 30a) que l'étape de structuration 10. L'étape de structuration 20 ajoute un prétraitement 50. Ainsi, la structuration 30b comprend le prétraitement 50 et la structuration 30a du motif.

L'étape de prétraitement 50 comprend préférentiellement une texturisation de la surface 16 du substrat. La texturisation comprend la création d'une structure de texturisation, qui est moins profonde que les rainures du motif 17 de structuration. La structure de texturisation comprend préférentiellement des rainures de texturisation.

L'étape de prétraitement 50 comprend préférentiellement un déplacement 51 relatif de prétraitement et une irradiation 52 de prétraitement durant laquelle la surface 16 est irradiée par un faisceau 53 de prétraitement émis par le laser 31 de structuration. Le faisceau 53 de prétraitement est préférentiellement pulsé. L'irradiation 52 et le déplacement 51 sont préférentiellement simultanés. Il est toutefois possible qu'ils soient successifs, et notamment qu'ils se répètent de nombreuses fois l'un à la suite de l'autre. L'irradiation 52 et le déplacement 51 génèrent un substrat 13 avec une texture.

Durant l'étape de prétraitement 50, le laser de structuration 31 envoie préférentiellement des impulsions d'une durée de moins de 1000ns. Durant le prétraitement 50, le laser de structuration 31 a préférentiellement un taux de répétition de 1 KHz à 500 KHz. Durant l'étape de prétraitement 50, le laser de structuration 31 a préférentiellement une puissance de 1 W à 100 W. Durant l'étape de prétraitement 50, le laser de structuration 31 a préférentiellement une énergie de 0.01 à 100 mJ.

Le déplacement 51 relatif de prétraitement est réalisé suivant un schéma de prétraitement prédéfini. Le déplacement 51 relatif de prétraitement est préférentiellement réalisé avec une vitesse linéaire plus grande que le mouvement 41 relatif de la structuration 30a du motif, de façon à ce que le temps pris par le prétraitement 50 n'ait pas un impact important sur l'ensemble du temps pris par la structuration 30b qui comprend le prétraitement 50 et la structuration 30a du motif. Par exemple, la vitesse linéaire de déplacement 51 relatif du faisceau 53 de prétraitement lors du prétraitement 50 par rapport au substrat 11 peut être au moins une fois et demi plus grande que la vitesse linéaire de déplacement relatif du faisceau de structuration 32 lors du déplacement relatif 41, préférentiellement au moins quatre fois plus grande. Par exemple, la vitesse linéaire de déplacement 51 relatif du faisceau 53 de prétraitement lors du prétraitement 50 peut être entre 1000 et 10.000 mm/s. Plus particulièrement, la vitesse linéaire de déplacement 51 relatif du faisceau 53 de prétraitement lors du prétraitement 50 peut être entre 3000 et 5000 mm/s.

Suite au prétraitement 50, le substrat 13 avec une texture suit les étapes de mouvement 41 relatif et irradiation 42 y gravant 30a le motif de structuration prédéfini, de façon à former un substrat 12b avec texture et motif qui peut être utilisé dans un assemblage 130 subséquent (figure 3).

Dans une variante de la méthode 20 de structuration selon la deuxième réalisation de l'invention, un autre laser que le laser de structuration 31 utilisé pour l'irradiation 42 de la structuration 30a est utilisé pour l'irradiation 52 de prétraitement et/ou un autre dispositif de déplacement que le dispositif 33 de déplacement utilisé pour la structuration 30a est utilisé pour le déplacement 51 relatif de prétraitement.

Dans une variante de la méthode 20 de structuration, le prétraitement 50 a lieu après les étapes de mouvement 41 et irradiation 42 de structuration 30a créant le motif.

Le prétraitement peut par exemple comprendre la gravure d'une pluralité de lignes parallèles. Les lignes peuvent par exemple être distantes de 50 µm. Les lignes peuvent par exemple avoir une largeur de 50 µm. Les lignes peuvent par exemple avoir une profondeur entre 4 et 7 µm. La texturisation créée par le prétraitement couvre préférentiellement toute la partie de la surface 16 qui sera par la suite irradiée par un faisceau 132 de soudage (figure 3).

La fonction principale du prétraitement 50 est d'augmenter l'absorption d'un faisceau de soudage 132 sur la surface 16 lors du soudage d'assemblage 130 (figure 3) en augmentant la rugosité de la surface 16 du substrat.

La figure 3 illustre une méthode d'assemblage selon l'invention. La méthode d'assemblage inclut l'étape 10 de structuration d'un substrat 11 auquel cas il résulte de la structuration 30 le substrat 12a avec motif, ou l'étape 20 de structuration d'un substrat 11 auquel cas il résulte de la structuration 30 le substrat 12b avec texture et motif. Le substrat 12a avec motif et le substrat 12b avec texture et motif sont repris dans la description de la figure 3 sous l'appellation "substrat 12 avec (texture et) motif". La partie de la surface 16 du substrat 12 avec (texture et) motif qui va être soudée est appelée première partie 117 de surface.

La méthode d'assemblage fait appel à une pièce 14 ayant une surface. La partie de la surface de la pièce 14 qui doit être jointe est appelée deuxième partie 116 de surface. La deuxième partie 116 de surface comprend un matériau fusible ayant un point de fusion plus bas que le point de fusion de la première partie 117 de surface structurée du substrat afin qu'un échauffement localisé, créé par un dispositif 131 de chauffage, puisse faire fondre le matériau fusible de la pièce sans faire fondre la première partie 117 de surface structurée du substrat. La pièce 14 comprend préférentiellement un polymère et/ou du verre. La deuxième partie 116 de surface peut être plane ou courbe.

La méthode d'assemblage fait également appel à un dispositif de chauffage 131 capable de créer une augmentation de température dans le matériau fusible suffisante pour le faire fondre. Le dispositif de chauffage 131 peut être un laser de soudage, qui est préférentiellement différent du laser 31 de structuration. En effet, la structuration 30 peut se faire dans un atelier différent de celui dans lequel l'assemblage 130 est réalisé.

Dans le cas où le dispositif 131 de chauffage est un laser de soudage, le laser de soudage émet un faisceau 132 de soudage capable de traverser la pièce 14 et de chauffer par irradiation la première partie 117 de la surface 16 qui a été structurée lors de la structuration 30. Autrement dit, la longueur d'onde et les autres caractéristiques du faisceau 132 de soudage sont choisies pour que le faisceau 132 de soudage soit au moins partiellement transmis par la pièce 14 et au moins partiellement absorbé par la première partie 117 de surface.

Lors d'une étape d'assemblage 130, la deuxième partie 116 de surface est mise en contact avec la première partie 117 de surface. L'étape d'assemblage 130 comprend une étape de mise en contact du substrat structuré 12 avec la pièce 14 ainsi qu'une étape de mise en compression. Le faisceau 132 de soudage est envoyé sur la première partie 117 de surface au travers de la pièce 14 de façon à irradier la première partie 117 de surface.

L'absorption du faisceau 132 de soudage par la première partie 117 de surface du substrat 12 provoque une augmentation de sa température. L'augmentation de température est choisie telle qu'elle fait fondre de la matière d'un matériau fusible de la deuxième partie 116 de surface de la pièce 14 qui entre dans les rainures du motif 17 gravées sur la première partie 117 de surface. Au refroidissement, cette matière de la pièce 14 se solidifie, bloquant la deuxième partie 116 de surface avec la première partie 117 de surface, c'est-à-dire provocant une adhésion entre le substrat 12 et la pièce 14, de façon à former un assemblage 15 soudé. En outre, l'augmentation de température peut être choisie telle qu'elle ne fait pas fondre la première partie 117 de surface supérieure 16 structurée du substrat 12, c'est-à-dire que la température atteinte dans la première partie 117 de surface supérieure 16 structurée du substrat 12 est inférieure à sa température de fusion.

L'augmentation de température est d'autant plus grande que l'absorption du faisceau 132 de soudage par la première partie 117 de surface du substrat 12 est grande. C'est pourquoi il est avantageux de réaliser le prétraitement 50 (figure 2), de façon à rendre la première partie 117 de surface plus rugueuse et donc plus apte à absorber le faisceau 132 de soudage. Il est aussi possible, tout en restant dans le cadre de l'invention, que l'assemblage soit réalisé par un autre dispositif de chauffage 131 qu'un laser. Le dispositif de chauffage 131 peut par exemple chauffer le substrat 12 par conduction.

Dans une réalisation de l'invention, le moyen de mise en contact est un dispositif disposant de moyens de préhension de type pince ou moyen de préhension par dépression. Ces moyens de préhension sont de préférence équipés d'un bras permettant l'amenée de la pièce 14. Ces moyens de préhensions peuvent également permettre une fois l'assemblage du substrat structuré 12 et de la pièce 14 réalisé, de transporter l'assemblage vers un lieu de rassemblement des assemblages et d'amener un nouveau substrat à structurer afin de pouvoir réaliser un nouvel assemblage avec une nouvelle pièce. Ces moyens de préhension permettent d'amener la partie 116 de la pièce 14 destinée à être assemblée avec la partie 117 de surface supérieure 16 du substrat 11 comprenant ledit motif 17.

Dans une réalisation de l'invention, une pression mécanique est appliquée pour maintenir le contact entre la deuxième partie 116 de surface et la première partie 117 de surface lors de l'irradiation par le faisceau de soudage. L'application de cette pression mécanique correspond à une étape de mise en compression. Cette pression favorise aussi le fait que la matière du matériau fusible de la deuxième partie 116 de surface de la pièce 14 entre dans les rainures du motif 17 structurés sur la première partie 117 de surface. Cette pression est appliquée à l'aide d'un dispositif de mise sous pression 140.

Dans une réalisation de l'invention, l'assemblage 130 inclut un déplacement du faisceau 132 de soudage et/ou de la deuxième partie 116 de surface mise en contact avec la première partie 117 de surface, afin de permettre le soudage sur une surface sensiblement plus grande que le diamètre du faisceau 132 de soudage.

La méthode d'assemblage peut notamment être utilisée dans l'assemblage d'un support d'ampoule pour des applications d'éclairage dans l'industrie automobile.

La figure 4 illustre un dispositif 80 de structuration utilisé lors de l'étape de structuration 10 ; 20 destiné à réaliser la structuration 30a du motif, et potentiellement le prétraitement 50. Le dispositif 80 comprend le laser 31 de structuration qui émet le faisceau 32 de structuration vers un chemin optique 34 qui réalise la mise en forme du faisceau 32. Le chemin optique 34 comprend différents éléments optiques, par exemple au moins un parmi: un miroir, une lentille, un collimateur/dilatateur de faisceau (beam expander), un atténuateur, un polariseur. Le chemin optique 34 envoie le faisceau 32 vers une tête scanner 35 qui comprend préférentiellement des miroirs inclinables et une lentille oculaire et est capable de diriger le faisceau 32 vers la surface 16 du substrat. Le dispositif 80 comprend aussi préférentiellement un système de vision 36, et un système de mesure 37 confocal. Le dispositif 80 comprend également un dispositif 39 de déplacement du substrat. Le dispositif 39 de déplacement permet préférentiellement de translater le substrat selon une première direction 101, une deuxième direction 102, une troisième direction 103 et de faire tourner le substrat autour d'au moins deux axes de rotation.

Dans une réalisation de l'invention, un ordinateur 38, qui peut être une tablette, contrôle le laser 31 de structuration, le chemin optique 34, la tête scanner 35, le système de vision 36, le système de mesure 37 et le dispositif 39 de déplacement.

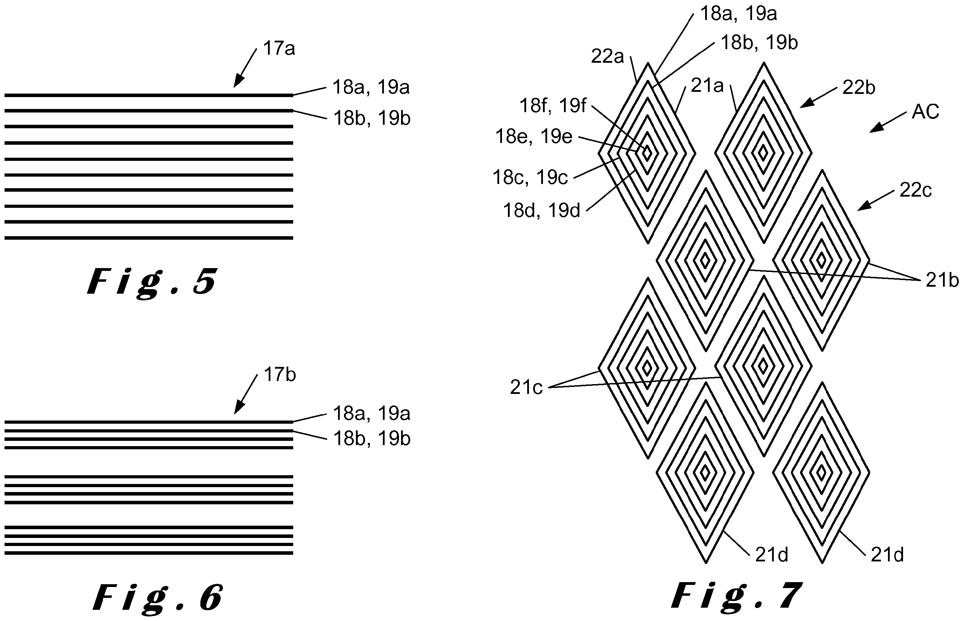

Le motif 17 comprend préférentiellement une pluralité de lignes. Le motif 17 peut comprendre des lignes droites, courbes, brisées, en forme de polygone, ouvertes, fermées,... Des exemples de réalisations du motif 17 sont illustrés aux figures 5 à 8.

La figure 5 illustre un premier exemple de motif 17a, comprenant une pluralité de lignes parallèles 18a, 18b,... espacées d'une distance constante. Chaque ligne 18 est aussi une forme géométrique 19.

La figure 6 illustre un deuxième exemple de motif 17b, comprenant une pluralité de lignes parallèles 18a, 18b,... groupées. Chaque ligne 18 est aussi une forme géométrique 19.

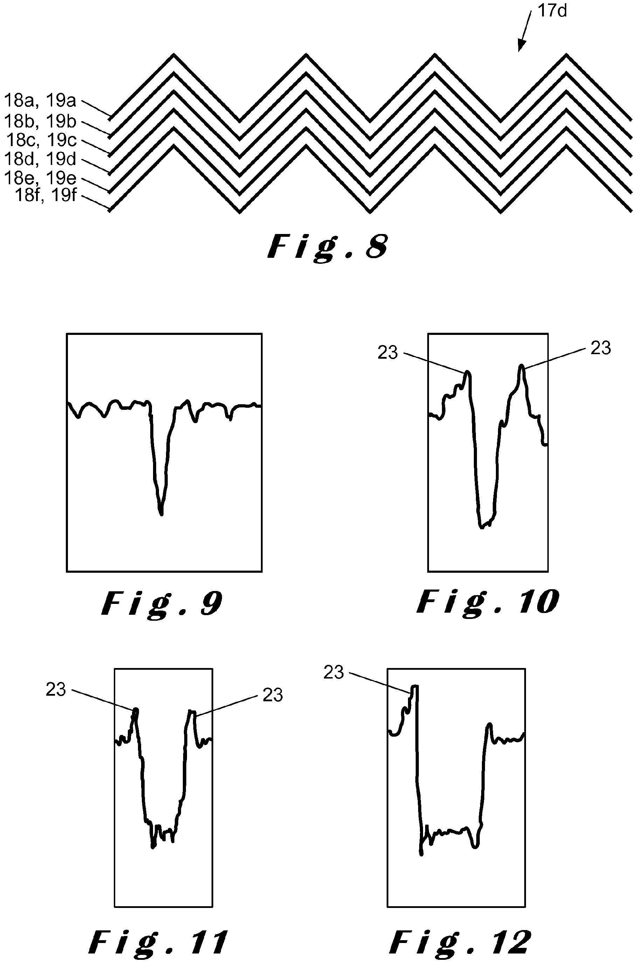

La figure 7 et la figure 8 illustrent deux exemples de réalisation du motif dans lesquels le motif comprend une première ligne et une deuxième ligne telles que la première ligne est imbriquée dans la deuxième ligne.

La figure 7 illustre un troisième exemple de motif 17c. Le motif 17c comprend des lignes 18a, 18b,... Les lignes 18 sont des formes géométriques 19, plus précisément des losanges. Il est possible que les formes soient des carrés, des rectangles, des hexagones, des triangles, tout en restant dans le cadre de l'invention. En particulier, cela peut être des formes permettant un pavage de la surface. Les formes 19 sont préférentiellement reproduites de façon à couvrir au moins 80% de la surface d'adhésion. Elles peuvent par exemple être reproduites entre 4 et 60 fois.

Les formes 19 sont groupées par groupes 22, chaque groupe 22 comprenant une pluralité de formes concentriques. Les groupes 22 sont disposés en rangées 21, de façon à ce qu'une première range 21a soit imbriquée dans une deuxième rangée 21b.

Les inventeurs ont trouvé que pour un motif comme celui de la figure 8, où la composante verticale est plus grande que la composante horizontale, la résistance au cisaillement après assemblage est meilleure dans la direction verticale que dans la direction horizontale.

La figure 8 illustre un quatrième exemple de motif 17d. Le motif 17d comprend des lignes 18a, 18b,... Les lignes 18 sont des formes géométriques 19, plus précisément des zigzags comprenant des segments de lignes. Les lignes 18 sont imbriquées l'une dans l'autre. Les segments de lignes d'un zigzag forment sur la figure des angles de 90°, mais il serait possible qu'ils forment alternativement des angles aigus et obtus tout en restant dans le cadre de l'invention.

Comme illustré aux figures 5 à 8, les formes 19 géométriques sont préférentiellement répétées, le contour de chaque forme géométrique correspondant à une ligne brisée.

Les figures 9 à 12 illustrent des coupes de rainures gravées par la méthode selon l'invention. Dans ces coupes, la direction verticale correspond à la profondeur des rainures, et la direction horizontale correspond à la largeur des rainures. La figure 9 illustre un premier exemple de coupe de rainure. La figure 10 illustre un deuxième exemple de coupe de rainure. La figure 11 illustre un troisième exemple de coupe de rainure. La figure 12 illustre un quatrième exemple de coupe de rainure. Les rainures peuvent avoir une forme de V (figures 9, 10) ou une forme de U (figure 11, 12). Les rainures peuvent ne pas avoir de zone refondue 23 (figure 9), en avoir de deux côtés (figures 10, 11) ou d'un seul côté (figure 12). La hauteur des zones refondues est préférentiellement de moins de 80µm par rapport à la surface du substrat en-dehors du motif. La hauteur des zones refondues est plus préférentiellement de moins de 10µm par rapport à la surface du substrat en-dehors du motif.

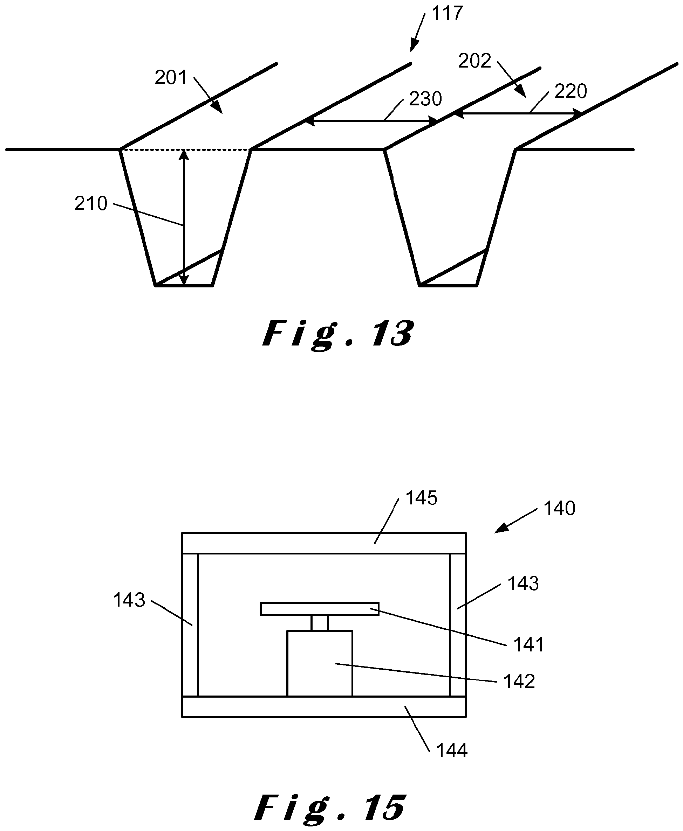

La figure 13 illustre une coupe schématique d'un substrat structuré selon la présente invention. On y voit une portion de la première partie 117 de substrat structuré présentant deux rainures 201, 202. La figure 13 illustre une profondeur 210 de rainure. La figure 13 illustre aussi une largeur 220 de rainure. La figure 13 illustre aussi une distance 230 entre deux rainures.

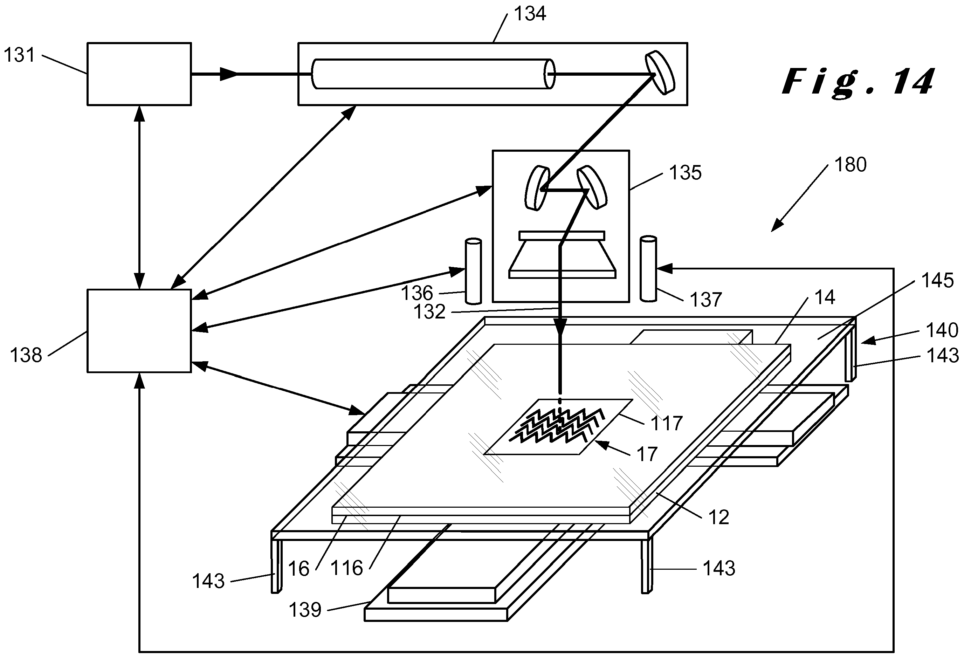

La figure 14 illustre un dispositif d'assemblage 180 permettant de réaliser le soudage destiné à réaliser l'assemblage 130 du substrat 12 avec (texture et) motif et de la pièce 14. Le dispositif 180 comprend le dispositif 131 de chauffage, qui est le laser de soudage dans la réalisation de l'invention illustrée, qui émet le faisceau 132 de soudage vers un chemin optique 134 qui réalise la mise en forme du faisceau 132 de soudage. Le chemin optique 134 comprend différents éléments optiques, par exemple au moins un parmi: un miroir, une lentille, un collimateur/dilatateur de faisceau (beam expander), un atténuateur, un polariseur. Le chemin optique 134 envoie le faisceau 132 vers une tête scanner 135 qui comprend préférentiellement des miroirs inclinables et une lentille oculaire et est capable de diriger le faisceau 132 vers la première partie 117 de surface au travers de la pièce 14. Le dispositif 180 comprend aussi préférentiellement un système de vision 136, et un instrument de mesure de température 137. Le dispositif 180 comprend également un dispositif 139 de déplacement permettant de déplacer l'ensemble formé par la deuxième partie 116 de surface mise en contact avec la première partie 117 de surface et le dispositif de mise sous pression 140 qui est décrit plus en détail en se référant à la figure 15.

Dans une réalisation de l'invention, un ordinateur 138, qui peut être une tablette, contrôle le laser de soudage, le chemin optique 134, la tête scanner 135, le système de vision 136, le système de mesure 137 et le dispositif 139 de déplacement.

La figure 15 illustre le dispositif de mise sous pression 140 compris dans le dispositif de soudage 180 selon une réalisation de l'invention. Le dispositif de mise sous pression 140 comprend un premier plateau 141 destiné à supporter le substrat structuré 12 sur lequel est posée la pièce 14. Le dispositif de mise sous pression 140 comprend également un élément de support ajustable en hauteur 142 capable de mouvoir le premier plateau 141 dans une direction verticale. Le dispositif de mise sous pression 140 comprend également une plaque 145 transparente au faisceau 132 de soudage, des poteaux 143 supportant la plaque 145 et un deuxième plateau 144 destiné à supporter l'élément de support ajustable en hauteur 142 et les poteaux 143. La plaque 145 est par exemple faite en PMMA. Pour utiliser ce dispositif 140, le substrat structuré 12 est posé sur le premier plateau 141, la pièce 14 est posée sur le substrat structuré 12 et l'élément de support ajustable en hauteur 142 est ajusté pour presser la pièce 14 contre la plaque 145. Le faisceau 132 de soudage est alors envoyé à travers la plaque 145. Si le dispositif 139 de déplacement comprend une partie permettant de déplacer le substrat 12 et la pièce 14 et située sous ceux-ci, cette partie peut être disposée sous le deuxième plateau 144 ou entre le deuxième plateau 144 et le premier plateau 141, par exemple sur ou sous l'élément de support ajustable en hauteur 142.

### Exemples de modes de réalisations :

Premier exemple : Substrat en aluminium et pièce en thermoplastique de type polycarbonate transparent :
Un premier test expérimental a été réalisé sur un substrat 11 en aluminium d'une épaisseur de 2 mm et a comporté :
- le prétraitement 50 utilisant un laser pulsé avec 50W de puissance, 100ns de durée d'impulsion, 80kHz de taux de répétition et une vitesse linéaire de 3900mm/s, et réalisant des lignes parallèles distantes de 50 µm ;
- la structuration 30a utilisant un laser pulsé avec 20W de puissance, 100ns de durée d'impulsion, 20kHz de taux de répétition et une vitesse linéaire de 720mm/s, réalisant un motif comportant des losanges similaires à ceux de la figure 7, avec les plus grands losanges, c'est-à-dire les plus extérieurs parmi la pluralité de losanges concentriques, ayant une grande diagonale de 2mm et une petite diagonale de 1mm; l'aire occupée par lesdites rainures et lesdites zones refondues 23 le long desdites rainures sur la surface supérieur 16 représente 0,32 de l'aire de ladite première partie 117 de surface supérieure 16.
- l'assemblage 130 du substrat 12b avec une pièce 14 de polycarbonate transparente de 2 mm d'épaisseur ; et
- un test de cisaillement qui a donné un résultat de 16 N/mm² pour lequel une rupture cohésive du matériau thermoplastique a été observée pour cette valeur de force par unité de surface.
Deuxième exemple : Substrat en acier galvanisé et pièce en polymère thermoplastique de type polypropylène opaque

Un deuxième test expérimental a été réalisé sur un substrat 11 en acier galvanisé d'une épaisseur de 0.8mm et a comporté :
- la structuration 30a utilisant un laser pulsé de type nanoseconde avec 50W de puissance, 100ns de durée d'impulsion, 20kHz de taux de répétition et une vitesse linéaire de 720mm/s, réalisant un motif comportant des losanges, les losanges étant espacés de 100µm ;
   l'aire occupée par lesdites rainures et lesdites zones refondues 23 le long desdites rainures sur la surface supérieur 16 représente 0,79 de l'aire de ladite première partie 117 de surface supérieure 16.
- l'assemblage 130 du substrat 12a avec une pièce 14 opaque de polypropylène de type PPT20 de 2 mm d'épaisseur; et
- un test de traction qui a donné un résultat de 6.9N/mm² correspondant à une rupture cohésive du polymère.
Troisième exemple : Substrat en cuivre et pièce en polycarbonate transparent.

Un troisième test expérimental a été réalisé sur un substrat 11 en cuivre d'une épaisseur de 25 µm et a comporté:
- la structuration 30a utilisant un laser pulsé de type nanoseconde avec 20 W de puissance, 100 ns de durée d'impulsion, 20 kHz de taux de répétition et une vitesse linéaire de 300 mm/s, réalisant un motif comportant des losanges, les losanges étant espacés de 80 µm ;
   l'aire occupée par lesdites rainures et lesdites zones refondues 23 le long desdites rainures sur la surface supérieur 16 représente 0,81 de l'aire de ladite première partie 117 de surface supérieure 16.
- l'assemblage 130 du substrat structuré 12 avec une pièce 14 transparente de polycarbonate (PC) de 2 mm d'épaisseur; et
- un test de traction qui a donné un résultat de 8,43 N/mm² à la rupture cohésive du polymère.

## Revendications

1. Méthode d'assemblage d'un substrat (11) mince ayant une épaisseur inférieure à 1 mm avec une pièce (14), ledit substrat (11) ayant une surface supérieure (16) et une surface inférieure (160), et ladite pièce (14) ayant une surface, ladite méthode comprenant les étapes de :
a. structurer (30) ladite surface supérieure (16) dudit substrat (11) en effectuant les étapes suivantes :
i. fournir ledit substrat (11),
ii. fournir un laser de structuration (31) à impulsions capable de générer un faisceau laser (32) de structuration pulsé apte à graver la surface supérieure (16) du substrat (11) de manière non-traversante, le faisceau laser (32) de structuration pulsé ayant une longueur d'onde comprise entre 200 et 11000 nm, une puissance suffisante pour créer une structuration du substrat (11) et présentant des impulsions d'une durée comprise entre 10⁻¹⁴s et 10⁻⁸s,
iii. générer le faisceau laser (32) de structuration pulsé apte à graver la surface supérieure (16) du substrat (11) de manière non-traversante, le faisceau laser (32) de structuration pulsé ayant une longueur d'onde comprise entre 200 et 11000 nm, une puissance suffisante pour créer une structuration du substrat (11) et présentant des impulsions d'une durée comprise entre 10⁻¹⁴s et 10⁻⁸s,
iv. fournir un dispositif (33 ; 39) de déplacement capable de générer un mouvement relatif (41) entre le faisceau laser (32) de structuration pulsé et ladite surface supérieure (16) dudit substrat (11),
v. irradier (41) la surface supérieure (16) du substrat (11) avec le faisceau laser (32) de structuration pulsé en induisant un mouvement relatif (41) entre le faisceau laser (32) de structuration pulsé et la surface supérieure (16) dudit substrat (11), afin de générer une première partie (117) de surface supérieure (16) structurée du substrat (12) comprenant un motif (17),
b. fournir ladite pièce (14) dont ladite surface présente une deuxième partie (116) de surface comprenant un matériau fusible ayant un point de fusion plus bas que le point de fusion de ladite première partie (117) de surface supérieure (16) structurée du substrat (12),
c. disposer la première partie (117) de surface supérieure (16) structurée du substrat (12) en contact avec la deuxième partie (116) de surface de ladite pièce (14),
d. appliquer une pression avec un dispositif de mise sous pression (140) de façon à maintenir le contact entre ladite première partie (117) de surface supérieure (16) structurée du substrat (12) et ladite deuxième partie (116) de surface de la pièce (14),
e. fournir un dispositif (131) de chauffage capable de créer une augmentation de température dans le matériau fusible suffisante pour le faire fondre, et
f. chauffer, grâce au dispositif (131) de chauffage, le matériau fusible de manière à atteindre dans le matériau fusible, une température suffisante pour en faire fondre au moins une partie dans le motif (17) de la première partie (117) de surface supérieure (16) structurée du substrat (12).

2. Méthode selon la revendication précédente **caractérisée en ce que** ledit substrat (11) est métallique et la pièce (14) est à base de polymères.

3. Méthode selon l'une quelconque des revendications précédentes **caractérisée en ce que** ledit motif (17) comprend une pluralité de lignes (18), chaque ligne (18) correspondant à une rainure gravée dans le substrat (11), **en ce que** le motif (17) comprend une répétition de formes géométriques (18), **en ce que** la surface structurée comprend une densité de forme géométrique (18) par mm² comprise entre 10000 et 0,1, et **en ce que** lesdites formes géométriques répétées comprennent une pluralité de losanges, carrés, triangles, rectangles ou hexagones.

4. Méthode selon l'une quelconque des revendications précédentes **caractérisée en ce que** ledit substrat (11) a une épaisseur comprise entre 100 µm et 500 µm.

5. Méthode selon l'une quelconque des revendications précédentes comprenant en outre une étape de prétraitement (50) pour augmenter une absorption optique d'une surface du substrat (11) et comprenant les étapes suivantes :
i. irradier (52) le substrat (11) avec un faisceau (53) de prétraitement pour augmenter la rugosité de ladite surface (16 ; 160) du substrat (11) ;
ii. imposer un déplacement relatif entre le substrat (11) et le faisceau (53) de prétraitement produit par le laser de structuration (31) à impulsions grâce au dispositif (33 ; 39) de déplacement ;
de sorte que le prétraitement (50) comprend une texturisation de la surface (16 ; 160) du substrat (11) qui donne lieu à une structure de prétraitement moins profonde que le motif (17) gravé lors de l'étape a.v..

6. Méthode selon l'une quelconque des revendications précédentes, **caractérisée en ce qu'**une vitesse linéaire de mouvement relatif entre le faisceau (53) de prétraitement et ladite surface supérieure (16) dudit substrat (11) lors du prétraitement (50) est au moins une fois et demi plus grande qu'une vitesse linéaire de mouvement relatif entre le faisceau laser (32) de structuration pulsé et ladite surface supérieure (16) dudit substrat (11) lors de l'étape a.v..

7. Méthode selon l'une quelconque des revendications précédentes, **caractérisée en ce que** le dispositif (131) de chauffage est un laser de soudage produisant un faisceau (132) de soudage et qui permet de chauffer par irradiation ledit substrat structuré (12) et **en ce que** la pièce (14) est au moins partiellement transparente au faisceau (132) de soudage.

8. Méthode selon l'une quelconque des revendications précédentes **caractérisée en ce que** la première partie (117) de surface supérieure (16) structurée du substrat (12) est chauffée par ledit dispositif de chauffage lors de l'étape f..

9. Méthode selon l'une quelconque des revendications précédentes, **caractérisée en ce que** :
- les impulsions du faisceau laser (32) de structuration pulsé ont une durée comprise entre 10⁻¹⁵ s et 10⁻⁶ s et une puissance d'au moins 0,01 W,
- l'intensité du faisceau laser (32) de structuration pulsé est d'au moins 10 W/mm²,
- le faisceau laser (32) de structuration pulsé a une longueur d'onde comprise entre 1000 et 1100 nm,
- le faisceau laser (32) de structuration pulsé a un taux de répétition compris entre 1 KHz et 2 MHz,
- le mouvement relatif (41) du faisceau laser (32) de structuration pulsé par rapport au substrat (11) se fait à une vitesse linéaire comprise entre 10 et 10000 mm/s.

10. Méthode selon l'une quelconque des revendications précédentes **caractérisée en ce que** ledit motif (17) comprend une pluralité de lignes (18), chaque ligne (18) correspondant à une rainure gravée dans le substrat (11), **en ce que** le motif (17) comprend des lignes parallèles et **en ce que** le motif (17) comprend une densité de ligne comprise entre 100 lignes par mm² et 0,2 lignes par mm².

11. Méthode selon l'une quelconque des revendications précédentes **caractérisée en ce que** ledit motif (17) comprend une pluralité de lignes (18), chaque ligne (18) correspondant à une rainure gravée dans le substrat (11). les rainures ayant une largeur de 5 µm à 500 µm.

12. Méthode selon l'une quelconque des revendications précédentes **caractérisée en ce que** ledit motif (17) comprend une pluralité de lignes (18), chaque ligne (18) correspondant à une rainure gravée dans le substrat (11), **en ce que** ledit substrat structuré (12) comprend en outre des zones refondues (23) le long des rainures, les zones refondues (23) ayant une hauteur de moins de 80 µm par rapport à la surface supérieure (16) du substrat structuré (12), et **en ce que** l'aire occupée par lesdites rainures et lesdites zones refondues (23) le long desdites rainures sur la surface supérieure (16) représente 0,001 à 0,85 de l'aire de ladite première partie (117) de surface supérieure (16), de préférence 0,2 à 0,8 et de manière encore préférée 0,4 à 0,6.

13. Méthode selon l'une quelconque des revendications précédentes **caractérisée en ce que** :
- ledit substrat est en aluminium ;
- ladite pièce est en polycarbonate transparent ;
- ledit laser de structuration (31) est utilisé pour l'étape de prétraitement avec une puissance de 50 W, les impulsions du faisceau laser (32) de structuration pulsé utilisé pour l'étape de prétraitement ont une durée de 10⁻⁷s, un taux de répétition de 80 KHz, le mouvement relatif (41) du faisceau laser (32) de structuration pulsé utilisé pour l'étape de prétraitement par rapport au substrat (11) se fait à une vitesse linéaire de 3900mm/s ;
- ledit laser de structuration (31) est utilisé pour l'étape de structuration avec une puissance de 20 W, les impulsions du faisceau laser (32) de structuration pulsé utilisé pour l'étape de structuration ont une durée de 10⁻⁷s, un taux de répétition de 20 kHz, le mouvement relatif (41) du faisceau laser (32) de structuration pulsé utilisé pour l'étape de structuration par rapport au substrat (11) se fait à une vitesse linéaire de 720 mm/s ;
- ledit motif (17) selon la revendication 7 comprend une pluralité de losanges ayant une grande diagonale de 2 mm et une petite diagonale de 1 mm ;
- l'aire occupée par lesdites rainures et lesdites zones refondues (23) le long desdites rainures sur la surface supérieure (16) selon la revendication 11 représente 0,32 de l'aire de ladite première partie (117) de surface supérieure (16).

14. Méthode selon l'une quelconque des revendication 1 à 12 **caractérisée en ce que** :
- ledit substrat est en acier galvanisé ;
- ladite pièce est en polypropylène ;
- ledit laser de structuration (31) est utilisé pour l'étape de structuration avec une puissance de 50 W, les impulsions du faisceau laser (32) de structuration pulsé utilisé pour l'étape de structuration ont une durée de 10⁻⁷s, un taux de répétition de 20 KHz, le mouvement relatif (41) du faisceau laser (32) de structuration pulsé utilisé pour l'étape de structuration par rapport au- substrat (11) se fait à une vitesse linéaire de 720 mm/s ;
- ledit motif selon la revendication 7 comprend une pluralité de losanges espacés de 100 µm ;
- l'aire occupée par lesdites rainures et lesdites zones refondues (23) le long desdites rainures sur la surface supérieure (16) selon la revendication 11 représente 0,79 de l'aire de ladite première partie (117) de surface supérieure (16).

## Patentansprüche

1. Verfahren zum Verbinden eines dünnen Substrats (11) mit einer Dicke von weniger als 1 mm mit einem Bauteil (14), wobei das Substrat (11) eine obere Oberfläche (16) und eine untere Oberfläche (160) aufweist und das Bauteil (14) eine Oberfläche aufweist, wobei das Verfahren die folgenden Schritte umfasst:
a. Strukturieren (30) der oberen Oberfläche (16) des Substrats (11) durch Ausführen der folgenden Schritte:
i. Bereitstellen des Substrats (11),
ii. Bereitstellen eines Impulsstrukturierungslasers (31), der in der Lage ist, einen gepulsten Strukturierungslaserstrahl (32) zu erzeugen, der geeignet ist, die obere Oberfläche (16) des Substrats (11) nicht querträgerartig zu gravieren, wobei der gepulste Strukturierungslaserstrahl (32) eine Wellenlänge im Bereich zwischen 200 und 11000 nm und eine ausreichende Leistung aufweist, um eine Strukturierung des Substrats (11) zu erzeugen, und Impulse mit einer Dauer im Bereich zwischen 10⁻¹⁴ s und 10⁻⁸ s aufweist,
iii. Erzeugen des gepulsten Strukturierungslaserstrahls (32), der geeignet ist, die obere Oberfläche (16) des Substrats (11) nicht querträgerartig zu gravieren, wobei der gepulste Strukturierungslaserstrahl (32) eine Wellenlänge im Bereich zwischen 200 und 11000 nm und eine Leistung aufweist, die ausreicht, um eine Strukturierung des Substrats (11) zu erzeugen, und Impulse mit einer Dauer im Bereich zwischen 10⁻¹⁴ s und 10⁻⁸ s aufweist,
iv. Bereitstellen einer Verschiebevorrichtung (33; 39), die in der Lage ist, eine relative Bewegung (41) zwischen dem gepulsten Strukturierungslaserstrahl (32) und der oberen Oberfläche (16) des Substrats (11) zu erzeugen,
v. Bestrahlen (41) der oberen Oberfläche (16) des Substrats (11) mit dem gepulsten Strukturierungslaserstrahl (32) durch Induzieren einer relativen Bewegung (41) zwischen dem gepulsten Strukturierungslaserstrahl (32) und der oberen Oberfläche (16) des Substrats (11), um einen ersten Teil (117) der strukturierten oberen Oberfläche (16) des Substrats (12) zu erzeugen, der ein Muster (17) umfasst,
b. Bereitstellen des Bauteils (14), dessen Oberfläche einen zweiten Teil (116) der Oberfläche aufweist, der ein schmelzbares Material mit einem Schmelzpunkt umfasst, der niedriger ist als der Schmelzpunkt des ersten Teils (117) der strukturierten oberen Oberfläche (16) des Substrats (12),
c. Anordnen des ersten Teils (117) der strukturierten oberen Oberfläche (16) des Substrats (12) in Kontakt mit dem zweiten Teil (116) der Oberfläche des Bauteils (14),
d. Aufbringen eines Drucks mit einer Druckbeaufschlagungsvorrichtung (140), um so den Kontakt zwischen dem ersten Teil (117) der strukturierten oberen Oberfläche (16) des Substrats (12) und dem zweiten Teil (116) der Oberfläche des Bauteils (14) aufrechtzuerhalten,
e. Bereitstellen einer Heizvorrichtung (131), die in der Lage ist, einen Temperaturanstieg in dem schmelzbaren Material zu erzeugen, der ausreicht, um es zu schmelzen, und
f. Erwärmen des schmelzbaren Materials mittels der Heizvorrichtung (131), um in dem schmelzbaren Material eine Temperatur zu erreichen, die ausreicht, um mindestens einen Teil davon in dem Muster (17) des ersten Teils (117) der strukturierten oberen Oberfläche (16) des Substrats (12) zu schmelzen.

2. Verfahren nach dem vorstehenden Anspruch, **dadurch gekennzeichnet, dass** das Substrat (11) metallisch ist und das Bauteil (14) auf Polymerbasis ist.

3. Verfahren nach einem der vorstehenden Ansprüche, **dadurch gekennzeichnet, dass** das Muster (17) eine Vielzahl von Linien (18) umfasst, wobei jede Linie (18) einer in das Substrat (11) gravierten Nut entspricht, dass das Muster (17) eine Wiederholung von geometrischen Formen (18) umfasst, dass die strukturierte Oberfläche eine Dichte an geometrischen Formen (18) pro mm² im Bereich zwischen 10000 und 0,1 umfasst, und dass die wiederholten geometrischen Formen eine Vielzahl von Rauten, Quadraten, Dreiecken, Rechtecken oder Sechsecken umfassen.

4. Verfahren nach einem der vorstehenden Ansprüche, **dadurch gekennzeichnet, dass** das Substrat (11) eine Dicke im Bereich zwischen 100 µm und 500 µm aufweist.

5. Verfahren nach einem der vorstehenden Ansprüche, weiter umfassend einen Vorbehandlungsschritt (50) zum Erhöhen einer optischen Absorption einer Oberfläche des Substrats (11) und umfassend die folgenden Schritte:
i. Bestrahlen (52) des Substrats (11) mit einem Vorbehandlungsstrahl (53), um die Rauheit der Oberfläche (16; 160) des Substrats (11) zu erhöhen;
ii. Aufbringen einer relativen Verschiebung zwischen dem Substrat (11) und dem Vorbehandlungsstrahl (53), der von dem Impulsstrukturierungslaser (31) mittels der Verschiebevorrichtung (33; 39) erzeugt wird;
so dass die Vorbehandlung (50) eine Texturierung der Oberfläche (16; 160) des Substrats (11) umfasst, die zu einer Vorbehandlungsstruktur führt, die weniger tief ist als das Muster (17), das im Schritt a.v. graviert wurde.

6. Verfahren nach einem der vorstehenden Ansprüche, **dadurch gekennzeichnet, dass** eine lineare Geschwindigkeit der relativen Bewegung zwischen dem Vorbehandlungsstrahl (53) und der oberen Oberfläche (16) des Substrats (11) während der Vorbehandlung (50) mindestens eineinhalb Mal größer ist als eine lineare Geschwindigkeit der relativen Bewegung zwischen dem gepulsten Strukturierungslaserstrahl (32) und der oberen Oberfläche (16) des Substrats (11) während des Schritts a.v..

7. Verfahren nach einem der vorstehenden Ansprüche, **dadurch gekennzeichnet, dass** die Heizvorrichtung (131) ein Schweißlaser ist, der einen Schweißstrahl (132) erzeugt und der es ermöglicht, das strukturierte Substrat (12) durch Strahlung zu erwärmen, und dass das Bauteil (14) mindestens teilweise für den Schweißstrahl (132) transparent ist.

8. Verfahren nach einem der vorstehenden Ansprüche, **dadurch gekennzeichnet, dass** der erste Teil (117) der strukturierten oberen Oberfläche (16) des Substrats (12) während des Schritts f. durch die Heizvorrichtung erwärmt wird.

9. Verfahren nach einem der vorstehenden Ansprüche, **dadurch gekennzeichnet dass**:
- die Impulse des gepulsten Strukturierungslaserstrahls (32) eine Dauer im Bereich zwischen 10⁻¹⁵ s und 10⁻⁶ s und eine Leistung von mindestens 0,01 W aufweisen,
- die Intensität des gepulsten Strukturierungslaserstrahls (32) mindestens 10 W/mm² beträgt,
- der gepulste Strukturierungslaserstrahl (32) eine Wellenlänge im Bereich zwischen 1000 und 1100 nm aufweist,
- der gepulste Strukturierungslaserstrahl (32) eine Wiederholungsrate im Bereich zwischen 1 KHz und 2 MHz umfasst,
- die relative Bewegung (41) des gepulsten Strukturierungslaserstrahls (32) in Bezug auf das Substrat (11) mit einer linearen Geschwindigkeit im Bereich zwischen 10 und 10000 mm/s erfolgt.

10. Verfahren nach einem der vorstehenden Ansprüche, **dadurch gekennzeichnet, dass** das Muster (17) eine Vielzahl von Linien (18) umfasst, wobei jede Linie (18) einer in das Substrat (11) gravierten Nut entspricht, dass das Muster (17) parallele Linien umfasst und dass das Muster (17) eine Liniendichte im Bereich zwischen 100 Linien pro mm² und 0,2 Linien pro mm² umfasst.

11. Verfahren nach einem der vorstehenden Ansprüche, **dadurch gekennzeichnet, dass** das Muster (17) eine Vielzahl von Linien (18) umfasst, wobei jede Linie (18) einer in das Substrat (11) gravierten Nut entspricht, wobei die Nuten eine Breite von 5 µm bis 500 µm aufweisen.

12. Verfahren nach einem der vorstehenden Ansprüche, **dadurch gekennzeichnet, dass** das Muster (17) eine Vielzahl von Linien (18) umfasst, wobei jede Linie (18) einer in das Substrat (11) gravierten Nut entspricht, dass das strukturierte Substrat (12) weiter umgeschmolzene Bereiche (23) entlang der Nuten umfasst, wobei die umgeschmolzenen Bereiche (23) eine Höhe von weniger als 80 µm in Bezug auf die obere Oberfläche (16) des strukturierten Substrats (12) aufweisen, und dass die Fläche, die von den Nuten und den umgeschmolzenen Bereichen (23) entlang der Nuten auf der oberen Oberfläche (16) eingenommen wird, 0,001 bis 0,85 der Fläche des ersten Teils (117) der oberen Oberfläche (16) darstellt, vorzugsweise 0,2 bis 0,8 und noch mehr bevorzugt 0,4 bis 0,6.

13. Verfahren nach einem der vorstehenden Ansprüche, **dadurch gekennzeichnet dass**:
- das Substrat aus Aluminium besteht;
- das Bauteil aus transparentem Polycarbonat besteht;
- der Strukturierungslaser (31) für den Vorbehandlungsschritt mit einer Leistung von 50 W verwendet wird, die Impulse des gepulsten Strukturierungslaserstrahls (32), der für den Vorbehandlungsschritt verwendet wird, eine Dauer von 10⁻⁷ s und eine Wiederholungsrate von 80 KHz aufweisen, die relative Bewegung (41) des gepulsten Strukturierungslaserstrahls (32), der für den Vorbehandlungsschritt verwendet wird, relativ zu dem Substrat (11) mit einer linearen Geschwindigkeit von 3900 mm/s erfolgt;
- der Strukturierungslaser (31) für den Strukturierungsschritt mit einer Leistung von 20 W verwendet wird, die Impulse des gepulsten Strukturierungslaserstrahls (32), der für den Strukturierungsschritt verwendet wird, eine Dauer von 10⁻⁷ s und eine Wiederholungsrate von 20 kHz aufweisen, die relative Bewegung (41) des gepulsten Strukturierungslaserstrahls (32), der für den Strukturierungsschritt verwendet wird, in Bezug auf das Substrat (11) mit einer linearen Geschwindigkeit von 720 mm/s erfolgt;
- das Muster (17) nach Anspruch 7 eine Vielzahl von Rauten umfasst, die eine große Diagonale von 2 mm und eine kleine Diagonale von 1 mm aufweisen;
- die Fläche, die von den Nuten und den umgeschmolzenen Bereichen (23) entlang der Nuten auf der oberen Oberfläche (16) nach Anspruch 11 eingenommen wird, 0,32 der Fläche des ersten Teils (117) der oberen Oberfläche (16) darstellt.

14. Verfahren nach einem der Ansprüche 1 bis 12, **dadurch gekennzeichnet, dass**:
- das Substrat aus verzinktem Stahl besteht;
- das Bauteil aus Polypropylen besteht;
- der Strukturierungslaser (31) für den Schritt des Strukturierens mit einer Leistung von 50 W verwendet wird, die Impulse des gepulsten Strukturierungslaserstrahls (32), der für den Schritt des Strukturierens verwendet wird, eine Dauer von 10⁻⁷ s und eine Wiederholungsrate von 20 KHz aufweisen, die relative Bewegung (41) des gepulsten Strukturierungslaserstrahls (32), der für den Schritt des Strukturierens verwendet wird, in Bezug auf das Substrat (11) mit einer linearen Geschwindigkeit von 720 mm/s erfolgt;
- das Muster nach Anspruch 7 eine Vielzahl von Rauten umfasst, die in einem Abstand von 100 µm angeordnet sind;
- die Fläche, die von den Nuten und den umgeschmolzenen Bereichen (23) entlang der Nuten auf der oberen Oberfläche (16) nach Anspruch 11 eingenommen wird, 0,79 der Fläche des ersten Teils (117) der oberen Oberfläche (16) darstellt.

## Claims

1. A method of assembling a thin substrate (11) having a thickness less than 1 mm with a part (14), said substrate (11) having an upper surface (16) and a lower surface (160), and said part (14) having a surface, said method comprising the steps of:
a. structuring (30) said upper surface (16) of said substrate (11) by performing the following steps:
i. providing said substrate (11),
ii. providing a pulsed structuring laser (31) capable of generating a pulsed structuring laser beam (32) capable of engraving the upper surface (16) of the substrate (11) in a non-through manner, the pulsed structuring laser beam (32) having a wavelength of between 200 and 11,000 nm, a sufficient power to create a structuring of the substrate (11) and having pulses of between 10⁻¹⁴ s and 10⁻⁸ s in duration,
iii. generating the pulsed structuring laser beam (32) capable of engraving the upper surface (16) of the substrate (11) in a non-through manner, the pulsed structuring laser beam (32) having a wavelength of between 200 and 11,000 nm, a sufficient power to create a structuring of the substrate (11) and having pulses of between 10⁻¹⁴ s and 10⁻⁸ s in duration,
iv. providing a displacement device (33; 39) capable of generating a relative motion (41) between the pulsed structuring laser beam (32) and said upper surface (16) of said substrate (11),
v. irradiating (41) the upper surface (16) of the substrate (11) with the pulsed structuring laser beam (32) by inducing a relative motion (41) between the pulsed structuring laser beam (32) and the upper surface (16) of said substrate (11), to generate a first portion (117) of structured upper surface (16) of the substrate (12) comprising a pattern (17),
b. providing said part (14) whose surface has a second surface portion (116) comprising a fusible material having a melting point lower than the melting point of said first portion (117) of structured upper surface (16) of the substrate (12),
c. placing the first portion (117) of structured upper surface (16) of the substrate (12) in contact with the second surface portion (116) of said part (14),
d. applying a pressure with a pressurizing device (140) so as to maintain contact between said first portion (117) of structured upper surface (16) of the substrate (12) and said second surface portion (116) of the part (14),
e. provide a heating device (131) capable of creating a temperature increase in the fusible material sufficient to melt it, and
f. heating, by means of the heating device (131), the fusible material so as to reach in the fusible material, a temperature sufficient to melt at least a portion of it in the pattern (17) of the first portion (117) of structured upper surface (16) of the substrate (12).

2. A method according to the preceding claim, **characterized in that** said substrate (11) is metallic and the part (14) is polymer-based.

3. A method according to any one of the preceding claims, **characterized in that** said pattern (17) comprises a plurality of lines (18), each line (18) corresponding to an engraved groove in the substrate (11), **in that** the pattern (17) comprises a repetition of geometric shapes (18), **in that** the structured surface comprises a density of geometric shape (18) per mm² of between 10,000 and 0.1, and **in that** said repeated geometric shapes comprise a plurality of diamonds, squares, triangles, rectangles or hexagons.

4. A method according to any one of the preceding claims, **characterized in that** the substrate (11) has a thickness of between 100 µm and 500 µm.

5. A method according to any one of the preceding claims further comprising a pre-treatment step (50) to increase an optical absorption of a surface of the substrate (11) and comprising the following steps:
i. irradiating (52) the substrate (11) with a pre-treatment beam (53) to increase the roughness of said surface (16; 160) of the substrate (11);
ii. imposing a relative displacement between the substrate (11) and the pre-treatment beam (53) produced by the pulsed structuring laser (31) by means of the displacement device (33; 39);
so that the pre-treatment (50) comprises a texturizing of the surface (16; 160) of the substrate (11) which results in a shallower pre-treatment structure than the pattern (17) engraved in step a.v..

6. A method according to any of the preceding claims, **characterized in that** a linear velocity of relative motion between the pre-treatment beam (53) and said upper surface (16) of said substrate (11) during the pre-treatment (50) is at least one and a half times greater than a linear velocity of relative motion between the pulsed structuring laser beam (32) and said upper surface (16) of said substrate (11) during step a.v..

7. A method according to any of the preceding claims, **characterized in that** the heating device (131) is a welding laser producing a welding beam (132) and which allows to heat by irradiation said structured substrate (12) and **in that** the part (14) is at least partially transparent to the welding beam (132).

8. A method according to any of the preceding claims **characterized in that** the first portion (117) of structured upper surface (16) of the substrate (12) is heated by said heating device during step f..

9. A method according to any of the preceding claims, **characterized in that**:
- the pulses of the pulsed structuring laser beam (32) have a duration of between 10⁻¹⁵ s and 10⁻⁶ s and a power of at least 0.01 W,
- the intensity of the pulsed structuring laser beam (32) is at least 10 W/mm²,
- the pulsed structuring laser beam (32) has a wavelength of between 1,000 and 1,100 nm,
- the pulsed structuring laser beam (32) has a repetition rate of between 1 KHz and 2 MHz,
- the relative motion (41) of the pulsed structuring laser beam (32) with respect to the substrate (11) is done at a linear velocity of between 10 and 10,000 mm/s.

10. A method according to any of the preceding claims **characterized in that** said pattern (17) comprises a plurality of lines (18), each line (18) corresponding to a groove engraved in the substrate (11), **in that** the pattern (17) comprises parallel lines and **in that** the pattern (17) comprises a line density of between 100 lines per mm² and 0.2 lines per mm².

11. A method according to any of the preceding claims **characterized in that** said pattern (17) comprises a plurality of lines (18), each line (18) corresponding to a groove engraved in the substrate (11), the grooves having a width from 5 µm to 500 µm.

12. A method according to any of the preceding claims **characterized in that** said pattern (17) comprises a plurality of lines (18), each line (18) corresponding to a groove engraved in the substrate (11), **in that** said structured substrate (12) further comprises re-melted areas (23) along the grooves, the re-melted areas (23) having a height of less than 80 µm with respect to the upper surface (16) of the structured substrate (12), and **in that** the area occupied by said grooves and said re-melted areas (23) along said grooves on the upper surface (16) represents 0.001 to 0.85 of the area of said first portion (117) of upper surface (16), preferably 0.2 to 0.8 and even more preferably 0.4 to 0.6.

13. A method according to any of the preceding claims **characterized in that**:
- said substrate is made of aluminium;
- said part is made of transparent polycarbonate;
- said structuring laser (31) is used for the pre-treatment step with a power of 50 W, the pulses of the pulsed structuring laser beam (32) used for the pre-treatment step have a duration of 10⁻⁷ s, a repetition rate of 80 KHz, the relative motion (41) of the pulsed structuring laser beam (32) used for the pre-treatment step with respect to the substrate (11) is done at a linear velocity of 3,900 mm/s;
- said structuring laser (31) is used for the structuring step with a power of 20 W, the pulses of the pulsed structuring laser beam (32) used for the structuring step have a duration of 10⁻⁷ s, a repetition rate of 20 kHz, the relative motion (41) of the pulsed structuring laser beam (32) used for the structuring step with respect to the substrate (11) is done at a linear velocity of 720 mm/s;
- said pattern (17) according to claim 7 comprises a plurality of diamonds having a large diagonal of 2 mm and a small diagonal of 1 mm;
- the area occupied by said grooves and said re-melted areas (23) along said grooves on the upper surface (16) according to claim 11 represents 0.32 of the area of said first portion (117) of upper surface (16).

14. A method according to any one of claims 1 to 12 **characterized in that**:
- said substrate is made of galvanized steel;
- said part is made of polypropylene;
- said structuring laser (31) is used for the structuring step with a power of 50 W, the pulses of the pulsed structuring laser beam (32) used for the structuring step have a duration of 10⁻⁷ s, a repetition rate of 20 KHz, the relative motion (41) of the pulsed structuring laser beam (32) used for the structuring step with respect to the substrate (11) is done at a linear velocity of 720 mm/s;
- said pattern according to claim 7 comprises a plurality of diamonds spaced 100 µm apart;
- the area occupied by said grooves and said re-melted areas (23) along said grooves on the upper surface (16) according to claim 11 represents 0.79 of the area of said first portion (117) of upper surface (16).
